(19) Europäisches Patentamt
European Patent Office
Office européen des brevets

(11) **EP 4 564 078 B1**

(12) **FASCICULE DE BREVET EUROPEEN**

(45) Date de publication et mention
de la délivrance du brevet:
**17.06.2026   Bulletin 2026/25**

(21) Numéro de dépôt: **24213779.2**

(22) Date de dépôt: **19.11.2024**

(51) Classification Internationale des Brevets (IPC):
***G02B 26/08*** *(2006.01)*

(52) Classification Coopérative des Brevets (CPC):
**G02B 26/085**

(54) **DISPOSITIF RÉFLECTEUR À ACTIONNEMENT MAGNÉTIQUE, ET PROCÉDÉ ASSOCIÉ**

MAGNETISCH BETÄTIGTE REFLEKTORVORRICHTUNG UND VERFAHREN DAFÜR

MAGNETICALLY ACTUATED REFLECTOR DEVICE AND METHOD

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **28.11.2023   FR 2313204**

(43) Date de publication de la demande:
**04.06.2025   Bulletin 2025/23**

(73) Titulaire: **Commissariat à l'Energie Atomique et aux Energies Alternatives
75015 Paris (FR)**

(72) Inventeurs:
• **DELAET, Bertrand
38054 GRENOBLE Cedex 09 (FR)**
• **MOLLARD, Laurent
38054 GRENOBLE Cedex 09 (FR)**
• **DIEPPEDALE, Christel
38054 GRENOBLE Cedex 09 (FR)**
• **LIECHTI, Romain
38054 GRENOBLE Cedex 09 (FR)**

(74) Mandataire: **Hautier IP
20, rue de la Liberté
06000 Nice (FR)**

(56) Documents cités:
**US-A1- 2016 124 214     US-A1- 2018 025 840
US-A1- 2018 267 294     US-B1- 6 388 789**

## Description

### DOMAINE TECHNIQUE

La présente invention concerne le domaine des dispositifs réflecteurs destinés à réfléchir un faisceau lumineux incident vers une cible. Elle trouve pour application particulièrement avantageuse le domaine des micromiroirs MEMS (microsystèmes électromécaniques), notamment pour des applications de LIDAR (de l'anglais « *light detection and ranging* », que l'on peut traduire en français « détection et estimation de la distance par la lumière ») et d'imagerie, par exemple dans les picoprojecteurs.

### ETAT DE LA TECHNIQUE

Les dispositifs réflecteurs sont utilisés dans de nombreuses applications dans lesquelles on cherche à réfléchir un faisceau lumineux incident vers une cible donnée.

Pour cela, un faisceau lumineux incident est émis par une source vers le dispositif réflecteur présentant un miroir. Le miroir présente une face avant disposée de façon à recevoir le faisceau lumineux incident. Le miroir est orienté avec la source de façon à former un faisceau réfléchi en direction de la cible.

Par exemple, des micromiroirs MEMS sont couramment utilisés pour des applications de LIDAR ou de projection. Les micromiroirs peuvent pour cela comprendre un module actionneur configuré pour faire pivoter le micromiroir autour d'au moins un axe de rotation. L'actionnement des micromiroirs peut être électrostatique, magnétique ou piézoélectrique.

L'actionnement magnétique des micromiroirs est le plus répandu. Il présente notamment l'avantage d'être linéaire à basse fréquence et présente un large débattement à faible tension.

Les dispositifs réflecteurs comprenant un module d'actionnement magnétiques sont conventionnellement fabriqués par l'assemblage hétérogène d'un aimant massif permanent à un micromiroir mécaniquement couplé à une bobine. Dans ces solutions, l'aimant massif est donc rapporté sur le substrat, par exemple par collage. L'intégration d'un tel aimant au dispositif réflecteur, nécessite des étapes de fabrication additionnelles pouvant être complexes et onéreuses. De plus, son volume important encombre le dispositif et augmente la consommation d'énergie nécessaire pour actionner le micromiroir. Les documents US20160124214, US6388789 divulguent de tels dispositifs.

Un objet de la présente invention est donc de proposer une solution améliorée de dispositif réflecteur à actionnement magnétique. Un objectif de la présente invention peut notamment être de fournir un dispositif réflecteur à actionnement magnétique, de fabrication simplifiée. Un objectif de la présente invention peut notamment être de fournir un dispositif réflecteur à actionnement magnétique de compacité améliorée.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, selon un mode de réalisation on prévoit un dispositif réflecteur destiné à réfléchir un faisceau lumineux incident comprenant :

- un substrat comprenant une première partie, et une deuxième partie mobile relativement à la première partie autour d'au moins un axe de rotation,
- un miroir disposé de façon solidaire sur la deuxième partie du substrat, le miroir étant configuré de façon à être pivoté autour de l'au moins un axe de rotation et de façon à recevoir le faisceau lumineux incident pour former un faisceau réfléchi,
- un module actionneur comprenant au moins un aimant et au moins une ligne électrique configurée pour être traversée par un courant électrique (i), l'au moins une ligne électrique étant à base d'un matériau électriquement conducteur, le module actionneur étant configuré pour entraîner en rotation la deuxième partie du substrat et du miroir par une force motrice générée par une interaction entre l'au moins un aimant et le courant électrique traversant l'au moins une ligne électrique,

l'un parmi l'au moins un aimant et l'au moins une ligne électrique étant disposé sur la première partie du substrat, l'autre parmi l'au moins un aimant et l'au moins une ligne électrique étant disposé sur la deuxième partie du substrat, et l'au moins un aimant comprenant un empilement d'au moins une bicouche comprenant une première sous-couche à base d'un matériau antiferromagnétique et une deuxième sous-couche à base d'un matériau ferromagnétique, l'empilement étant aimanté selon au moins une direction d'aimantation.

Le mouvement du miroir est ainsi actionné par la force de Laplace générée entre la ligne électrique, aussi appelée bobine, et l'aimant. L'aimant comprenant un empilement de sous-couches à base de matériaux ferromagnétique et antiferromagnétique alternés, il peut être déposé par des techniques de dépôts de microélectroniques, au lieu de devoir être rapporté par assemblage hétérogène. Comme détaillé en référence au procédé, l'intégration homogène de ces différentes briques permet la simplification et la réduction des coûts de fabrication du dispositif réflecteur. Des étapes additionnelles d'assemblage hétérogène peuvent être évitées, qui sont complexes et onéreuses. Les performances du dispositif peuvent en outre être améliorées par cette intégration homogène, en limitant le risque de défauts de l'aimant ou plus généralement du dispositif induits par l'intégration hétérogène. L'actionnement du miroir est donc fiabilisé. En outre, l'aimant peut ainsi présenter des dimensions, et en particulier une épaisseur, réduites par rapport aux solutions existantes. Cette épaisseur peut typiquement être micronique. La compacité du dispositif est donc améliorée.

Un deuxième aspect de l'invention concerne un procédé de fabrication d'un dispositif réflecteur, le procédé comprenant :

- une fourniture d'un substrat,
- une formation du module actionneur sur la face supérieure du substrat, la formation comprenant :

  ◦ un dépôt sur la face supérieure du substrat d'un empilement d'au moins une bicouche comprenant une première sous-couche à base d'un matériau antiferromagnétique et une deuxième sous-couche à base d'un matériau ferromagnétique, superposée à la première sous-couche,
  ◦ un traitement thermique de l'empilement déposé sous application d'un champ magnétique de façon à aimanter l'empilement selon au moins une direction d'aimantation,
  ◦ un dépôt d'un matériau électriquement conducteur sur la face supérieure du substrat, de façon à former l'au moins une ligne électrique,

- un dépôt d'un miroir sur la face supérieure du substrat,
- au moins une gravure du substrat de façon à former une première partie et une deuxième partie mobile relativement à la première partie autour d'au moins un axe de rotation, les dépôts et la gravure étant configurés ensemble de sorte que le miroir est déposé sur la deuxième partie du substrat, l'un parmi l'au moins un aimant et l'au moins une ligne électrique est disposé sur la première partie du substrat, l'autre parmi l'au moins un aimant et l'au moins une ligne électrique est disposé sur la deuxième partie du substrat.

Les briques de base d'un dispositif réflecteur à actionnement magnétique sont ainsi formées sur le substrat par des techniques de dépôts microélectroniques, au lieu d'être rapportées de façon hétérogène : la ligne électrique, le miroir, et l'aimant formé par dépôt sur le substrat. Cette intégration monolithique et collective de ces différentes briques, permet la simplification de la fabrication du dispositif réflecteur, en évitant des étapes additionnelles d'assemblage hétérogène qui peuvent être complexes et onéreuses. Les coûts de fabrication sont ainsi limités. L'intégration monolithique permet aussi de réduire significativement la distance séparant l'aimant de la ligne électrique. Cette réduction significative de la distance entre l'aimant et la ligne électrique s'avèrerait complexe dans une fabrication du module actionneur par report individuel d'aimants. L'intégration monolithique permet également l'amélioration des performances du dispositif réflecteur, en contournant notamment les contraintes mécaniques qui peuvent être imposées par un assemblage hétérogène.

## BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

La figure 1 illustre schématiquement un dispositif réflecteur à actionnement magnétique dans un repère orthonormé, comprenant les axes X, Y, Z, selon un exemple de réalisation.
Les figures 2A et 2B illustrent schématiquement selon des coupes transverses YZ un aimant comprenant un empilement de bicouches à base de matériaux antiferromagnétique et ferromagnétique, fabriqué par dépôt selon la présente invention, selon un exemple de réalisation.
Les figures 3, 4, 5A, 6A et 7A, illustrent schématiquement selon un plan XY des vues de dessus de différents exemples de réalisation du dispositif réflecteur, selon plusieurs modes de réalisation de la présente invention.
Les figures 5B, 6B et 7B, illustrent schématiquement selon des coupes transverses XZ ou YZ, les différents exemples de réalisation du dispositif réflecteur illustrés dans les figures 5A, 6A et 7A.
La figure 8A illustre schématiquement selon un plan XY une vue de dessus du dispositif réflecteur, selon un autre mode de réalisation de la présente invention.
La figure 8B illustre schématiquement selon une coupe transverse YZ, le dispositif réflecteur illustré en figure 8A.

Les figures 9A et 10A, illustrent schématiquement selon un plan XY deux exemples de configurations du module actionneur du dispositif réflecteur selon la présente invention.

Les figures 9B et 10B, représentent des graphes du champ magnétique produit par l'au moins un aimant en fonction d'une distance g entre l'au moins un aimant et la ligne électrique, obtenus par des calculs réalisés pour chacune des deux configurations illustrées dans les figures 9A et 10A respectivement.

Les figures 11A, 12A, 13A et 14A illustrent schématiquement selon un plan XY des vues de dessus des différentes étapes du procédé de fabrication du dispositif réflecteur, selon un mode de réalisation de la présente invention.

Les figures 11B, 12B, 13B et 14B illustrent schématiquement selon des coupes transverses XZ ou YZ, les différentes étapes du procédé de fabrication du dispositif réflecteur, selon un mode de réalisation de la présente invention.

Les figures 15A, 15B, 15C et 15D, illustrent schématiquement selon des coupes transverses YZ, les étapes de fabrication d'un module actionneur selon un premier exemple.

Les figures 16A à 16F, illustrent schématiquement selon des coupes transverses YZ, les étapes de fabrication d'un module actionneur selon un deuxième exemple.

Les figures 17A à 17I, illustrent schématiquement selon des coupes transverses YZ, les étapes de fabrication d'un module actionneur selon un troisième exemple.

Sur les figures en coupes transversales, des plans de coupe sont indiqués (A-A', B-B',..., N-N') avec des références croisées aux plans de coupe des figures correspondantes.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, sur les schémas de principe, les épaisseurs et/ou les dimensions des différentes couches, motifs et reliefs ne sont pas représentatives de la réalité.

## DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement.

Selon un exemple, les première et deuxième sous-couches sont superposées. Plus particulièrement, la deuxième sous-couche à base d'un matériau ferromagnétique peut être superposée à la première sous-couche à base d'un matériau antiferromagnétique.

Selon un exemple, l'au moins un aimant est solidarisé au substrat sans le biais d'un matériau adhésif ou d'une fixation mécanique ou d'une soudure. L'aimant est intégré au dispositif réflecteur d'une façon homogène et monolithique, c'est-à-dire sans recours à des procédés d'assemblage tels que le soudage, la fixation mécanique, ou l'utilisation d'un matériau adhésif. Cette intégration homogène et monolithique améliore la compacité du dispositif réflecteur et facilite sa fabrication.

Selon un exemple, l'aimant est directement en contact avec le substrat, et de préférence sans interface de colle.

Selon un exemple, l'au moins une direction d'aimantation (M) est dans le plan d'extension principale de l'empilement, et par exemple de la bicouche.

Selon un exemple, l'au moins un aimant et l'au moins une ligne électrique sont séparés d'une distance g la plus courte entre l'au moins un aimant et l'au moins une ligne électrique, la distance g étant supérieure ou égale à 500 nm. Selon un exemple, la distance g est inférieure ou égale à 7 $\mu$m, de préférence inférieure ou égale à 5 $\mu$m.

La distance g séparant l'aimant et la ligne électrique est un paramètre qui présente un impact significatif sur l'intensité de la force motrice $F_L$. Plus les aimants et la ligne électrique sont proches, plus la force de Laplace $F_L$ est importante. La réduction de la distance g permet de faciliter l'actionnement magnétique du miroir. Cela permet donc une réduction de la consommation d'énergie nécessaire à l'actionnement du miroir.

Selon un exemple, la deuxième sous-couche à base d'un matériau ferromagnétique présente une épaisseur $e_4$ comprise entre 2 nm et 50 nm, de préférence entre 10 nm et 50 nm.

Selon un exemple, la première sous-couche à base d'un matériau antiferromagnétique présente une épaisseur $e_3$ comprise entre 5 nm et 50 nm, de préférence entre 5 nm et 30 nm.

Les épaisseurs $e_3$ et $e_4$ peuvent être avantageusement optimisées pour chaque couple de matériaux ferromagnétique et antiferromagnétique. De préférence, l'épaisseur $e_3$ des sous-couches à base d'un matériau antiferromagnétique est minimisée, et l'épaisseur $e_4$ des sous-couches à base d'un matériau ferromagnétique est maximisée, tout en conservant une importante interaction d'échange entre les deux matériaux. A titre d'exemple, pour un matériau antiferromagnétique à base de PtMn l'épaisseur $e_3$ est choisie de préférence autour de 20 nm, de préférence autour de 12 nm, et l'épaisseur $e_4$ des sous-couches ferromagnétiques peut être autour de 20 nm. Selon un autre exemple, pour un matériau antiferromagnétique à base de IrMn, l'épaisseur $e_3$ est choisie de préférence autour de 8 nm, de préférence autour de 5 nm, et l'épaisseur $e_4$ des sous-couches ferromagnétiques peut être choisie autour de 20 nm. Selon un autre exemple, pour un matériau antiferromagnétique à base de NiMn, l'épaisseur $e_3$ est choisie de préférence autour de 50 nm,

et l'épaisseur $e_4$ des sous-couches ferromagnétiques peut être choisie autour de 50 nm.

Selon un exemple, l'empilement de l'au moins un aimant présente une épaisseur comprise entre 700 nm et 5 $\mu$m, de préférence entre 900 nm et 2 $\mu$m, et plus préférentiellement encore égale à 1 $\mu$m.

L'épaisseur magnétique effective de l'aimant est la somme des épaisseurs de toutes les sous-couches ferromagnétiques. En effet, le matériau antiferromagnétique présente des moments magnétiques sensiblement compensés, et par conséquent, ne produit pas un champ magnétique, ou produit un champ magnétique extrêmement faible. Ce sont principalement les moments magnétiques présents dans le matériau ferromagnétique qui contribuent à l'aimantation effective de l'aimant. L'épaisseur magnétique effective peut être sensiblement comprise entre 350 nm et 2,5 $\mu$m, de préférence entre 450 nm et 1 $\mu$m, et plus préférentiellement encore peut être sensiblement égale à 0,5 $\mu$m, selon le nombre de sous-couches ferromagnétiques.

Selon un exemple, l'empilement de l'au moins un aimant comprend N bicouches superposées, N étant un nombre entier compris entre 10 et 50.

Le nombre N de bicouches détermine l'épaisseur totale ainsi que l'aimantation effective de l'aimant.

Selon un exemple, la largeur de l'aimant est de l'ordre de 200 $\mu$m.

Selon un exemple, la longueur de l'aimant est de l'ordre de 5 mm.

Les dimensions réduites de l'aimant permettent de diminuer l'encombrement du dispositif et de réduire la consommation d'énergie du dispositif réflecteur.

Selon un exemple, le module actionneur est configuré de sorte que deux forces motrices s'exercent sur la deuxième partie mobile du substrat, lesdites forces étant de sens opposé entre elles.

Selon un exemple, le module actionneur comprenant au moins deux aimants, l'au moins une ligne électrique étant disposée sur la deuxième partie mobile du substrat de façon solidaire au miroir, les au moins deux aimants étant respectivement disposés sur la première partie de part et d'autre de l'au moins une ligne électrique par rapport à l'axe de rotation du miroir.

Selon un exemple, le module actionneur comprenant au moins deux lignes électriques, l'au moins un aimant étant disposé sur la deuxième partie mobile du substrat de façon solidaire au miroir, les au moins deux lignes électriques étant respectivement disposées sur la première partie du substrat de part et d'autre de l'au moins un aimant par rapport à l'axe de rotation du miroir.

Ces deux configurations permettent la génération de deux forces de Laplace qui vont s'exercer suivant deux sens opposés de part et d'autre de la deuxième partie mobile du substrat, pour faciliter la rotation du miroir.

La configuration dans laquelle la ligne électrique est disposée sur la deuxième partie mobile du substrat présente l'avantage d'alléger le poids de la partie mobile et de faciliter la rotation de cette partie mobile.

Selon un exemple, le module actionneur comprend au moins deux aimants, l'au moins une ligne électrique étant disposée sur la deuxième partie mobile du substrat de façon solidaire au miroir, les au moins deux aimants étant respectivement disposés sur la première partie de part et d'autre de l'au moins une ligne électrique par rapport à l'axe de rotation du miroir, dans lequel la deuxième partie mobile du substrat présente un évidement autour duquel l'au moins une ligne électrique forme une boucle, le dispositif réflecteur comprenant en outre un troisième aimant solidaire de la première partie du substrat et disposé dans l'évidement.

L'évidement dans la deuxième partie mobile permet d'alléger le poids de la partie mobile et de faciliter sa rotation. L'ajout d'un aimant permet d'augmenter l'intensité des forces de Laplace générées afin de faciliter encore la mise en rotation du miroir.

Selon un exemple, le miroir surmonte l'un parmi l'au moins un aimant et l'au moins une ligne électrique.

L'intégration de l'aimant ou de la ligne électrique en dessous du miroir permet d'optimiser la compacité du dispositif.

Selon un exemple, le miroir comprend une couche réflectrice métallique, de préférence à base d'or (Au) ou d'aluminium (Al).

Selon un exemple, le miroir comprend un empilement de Bragg.

Selon un exemple, l'au moins un aimant comprend une pluralité de sous-aimants juxtaposés entre eux, chaque sous-aimant étant en forme de barreau et comprenant l'empilement d'au moins une bicouche.

La division de l'aimant en sous-aimants en forme de barreaux parallèles, de sorte que chaque barreau présente un rapport de longueur sur largeur important, permet de préserver un bon alignement des moments magnétiques selon la direction principale de l'extension du barreau.

De par la forme longiligne des barreaux, l'aimantation peut naturellement en effet s'aligner le long de leurs directions principales, c'est-à-dire la direction dans laquelle leur longueur est mesurée, lors de la fabrication de l'aimant et plus particulièrement lorsqu'on effectue le recuit magnétique. L'orientation de la direction d'aimantation est fiabilisée, ce qui fiabilise l'actionnement du miroir. Cela peut être particulièrement avantageux pour fabriquer des sous-aimants présentant deux directions d'aimantation distinctes.

Selon un exemple, les sous-aimants forment une matrice selon au moins une dimension, en étant juxtaposés le long d'une direction perpendiculaire à leur direction d'extension principale et parallèle au plan d'extension principale du substrat.

Selon un exemple, les sous-aimants présentent des directions d'aimantation (M) distinctes entre eux.

Ainsi, des forces de Laplace peuvent être générées dans différentes directions. Cela peut notamment permettre d'actionner une rotation du miroir selon deux axes de rotations.

Selon un exemple, les sous-aimants sont séparés par un matériau non magnétique, de préférence à base d'oxyde de silicium ($SiO_2$).

Selon un exemple, l'au moins un aimant comprend une pluralité de matrices de sous-aimants superposées, selon une direction normale à la direction d'extension principale de l'empilement ou de façon équivalente du substrat. La superposition des matrices de barreaux aimantés suivant la même direction, permet d'augmenter l'aimantation effective de l'aimant.

Selon un exemple, le matériau électriquement conducteur est à base d'un métal, tel que l'aluminium ou le cuivre, de préférence à base de cuivre.

Selon un exemple, la ligne électrique est reliée à une source d'alimentation électrique.

Cette source permet d'alimenter la ligne ou la bobine électrique en un courant qui interagit avec le champ magnétique émanant de l'aimant pour générer une force de Laplace $F_L$ dite motrice dont la direction dépend du sens du courant électrique et de la direction de l'aimantation de l'aimant.

Selon un exemple, le matériau ferromagnétique est à base de CoFe, et le matériau antiferromagnétique est à base de PtMn ou de IrMn.

Le choix de ces couples de matériaux ferromagnétique et antiferromagnétique, permet d'une part d'améliorer l'aimantation à saturation $M_s$ dans le plan d'extension principale de la bicouche, ce qui améliore la génération de la force motrice $F_L$. D'autre part, ça permet de simplifier l'intégration de l'aimant, par exemple par dépôt physique en phase vapeur (PVD ou « Physical Vapor Depostion » selon la terminologie anglaise).

Selon un exemple, la composition en CoFe du matériau ferromagnétique est plus riche en cobalt (Co) qu'en fer (Fe).

Cela permet d'améliorer l'interaction d'échange entre les deux matériaux ferromagnétique et antiferromagnétique, et par conséquent, améliorer la résistance de l'aimant aux chocs magnétiques. En revanche, cela a tendance à diminuer l'aimantation à saturation $M_s$.

Selon un exemple, la composition en CoFe du matériau ferromagnétique est plus riche en fer (Fe) qu'en cobalt (Co).

Cela permet d'augmenter l'aimantation à saturation $M_s$. En revanche, cela a tendance à diminuer l'interaction d'échange entre les deux matériaux ferromagnétique et antiferromagnétique.

Selon un exemple, le traitement thermique de l'empilement est réalisé à une température supérieure ou égale à 265°C pour un matériau antiferromagnétique à base de IrMn.

Selon un exemple, le traitement thermique de l'empilement est réalisé à une température supérieure ou égale à 290°C pour un matériau antiferromagnétique à base de PtMn.

Selon un exemple, le traitement thermique de l'empilement est réalisé pendant une durée supérieure ou égale à 1 heure.

Le traitement thermique est souvent réalisé à une température supérieure à la température de blocage de la bicouche à partir de laquelle l'interaction d'échange entre la sous-couche antiferromagnétique et la sous-couche ferromagnétique disparaît. Cela permet de réorienter les moments magnétiques dans le matériau ferromagnétique selon la direction du champ magnétique externe appliqué. Après la réalisation du traitement thermique et le refroidissement de l'aimant à une température inférieure à la température de blocage, l'interaction d'échange est rétablie, et les moments magnétiques dans le matériau ferromagnétique sont figés selon la direction souhaitée, qui de préférence, est dans le plan d'extension principale de la bicouche.

Selon un exemple, le traitement thermique est réalisé sous l'application d'un champ magnétique présentant une direction qui fait un angle de 45° avec la direction d'extension principale des sous-aimants.

Cela permet d'obtenir à la fin du traitement thermique deux directions d'aimantations perpendiculaires, ce qui permet d'actionner une rotation du miroir selon deux axes de rotations.

Selon un exemple, l'intensité du champ magnétique appliqué lors d'au moins une partie du traitement thermique, et selon un exemple pendant tout le traitement thermique, est supérieure ou égale à 1 T.

Selon un exemple, la formation du module actionneur, comprend en outre :

- une gravure de l'empilement déposé de façon à former deux premiers aimants distincts, séparés par un espace exposant des flancs internes des deux premiers aimants et la face supérieure du substrat,

Selon un exemple, la formation du module actionneur, comprend en outre :

- un dépôt d'une couche de résine sur les deux premiers aimants de façon à couvrir la surface et les flancs internes des deux premiers aimants et à définir un motif destiné à la formation de l'au moins une ligne électrique entre les deux premiers aimants,

- le dépôt du matériau électriquement conducteur dans le motif défini dans l'étape précédente, pour former l'au moins une ligne électrique,
- un retrait de la couche de résine après le dépôt du matériau électriquement conducteur.

Selon un exemple, la formation du module actionneur comprend en outre :

- le dépôt d'une couche de matériau électriquement conducteur sur les deux premiers aimants de façon à couvrir au moins la surface des deux premiers aimants, et à combler au moins en partie, et de préférence entièrement, l'espace entre les deux premiers aimants,
- une gravure de la couche de matériau électriquement conducteur entre les deux premiers aimants de façon à former deux tranchées dans la couche de matériau électriquement conducteur délimitant une ligne électrique séparée des deux aimants, de préférence sans exposer les flancs internes des deux premiers aimants.

Selon un exemple, la formation du module actionneur comprend en outre :

- un dépôt d'une première couche d'oxyde sur les deux premiers aimants de façon à couvrir la surface et les flancs des deux premiers aimants, et à combler au moins en partie, et de préférence entièrement, l'espace entre les deux premiers aimants,
- une gravure partielle de la première couche d'oxyde à l'aplomb de l'espace entre les deux premiers aimants, sensiblement jusqu'au plan comprenant la face supérieure des deux premiers aimants, afin de former un motif destiné à la formation de l'au moins une ligne électrique,
- le dépôt d'une couche de matériau électriquement conducteur sur la première couche d'oxyde afin de combler au moins en partie, et de préférence entièrement, le motif défini dans l'étape précédente, pour former l'au moins une ligne électrique,
- une planarisation de la couche de matériau électriquement conducteur jusqu'à sensiblement atteindre la première couche d'oxyde,
- une formation de deux deuxièmes aimants distincts au-dessus de la première couche d'oxyde et à l'aplomb des deux premiers aimants,
- un dépôt d'une deuxième couche d'oxyde de façon à couvrir la surface et les flancs des deux deuxièmes aimants, et à combler au moins en partie, et de préférence entièrement, l'espace entre les deux deuxièmes aimants.

Selon un exemple, la deuxième couche d'oxyde est planarisée de façon à exposer la face supérieure des deux deuxièmes aimants.

Selon un exemple, le dépôt de la première couche d'oxyde est suivi des étapes suivantes :

- une gravure de la première couche d'oxyde entre les deux premiers aimants de façon à exposer le substrat sous-jacent, et de préférence exposer les flancs internes des deux premiers aimants,
- un dépôt d'une couche de résine sur les premiers aimants de façon à définir un motif entre les deux premiers aimants séparé des flancs internes des deux premiers aimants, destiné à la formation de l'au moins une ligne électrique, par exemple le dépôt de la couche de résine sur les premiers aimants est configuré de façon à couvrir au moins les flancs internes des deux premiers aimants, et
- le dépôt du matériau électriquement conducteur dans le motif défini dans l'étape précédente, pour former l'au moins une ligne électrique,
- un retrait de la couche de résine,
- un dépôt d'une deuxième couche d'oxyde de façon à combler au moins en partie, et de préférence entièrement, l'espace entre l'au moins une ligne électrique formée et les deux deuxièmes aimants.

Selon un exemple, le dépôt de la première couche d'oxyde est suivi des étapes suivantes :

- une gravure partielle de la première couche d'oxyde entre les deux premiers aimants de façon à exposer au moins en partie la face supérieure du substrat, sans exposer les flancs internes des deux premiers aimants, et de définir un motif destiné à la formation de l'au moins une ligne électrique,
- le dépôt du matériau électriquement conducteur dans le motif défini dans l'étape précédente, pour former l'au moins une ligne électrique,
- une planarisation de la couche de matériau électriquement conducteur de préférence sans exposer la face supérieure des deux premiers aimants,

- un dépôt d'une deuxième couche d'oxyde de façon à couvrir les deux premiers aimants et l'au moins une ligne électrique.

Il est précisé que, dans le cadre de la présente invention, les termes « sur », « surmonte », « recouvre », « sous-jacent », en « vis-à-vis » et leurs équivalents ne signifient pas forcément « au contact de ». Ainsi par exemple, la disposition d'une première couche sur une deuxième couche, ne signifie pas obligatoirement que les deux couches sont directement au contact l'une de l'autre, mais signifie que la première couche recouvre au moins partiellement la deuxième couche en étant soit directement à son contact, soit en étant séparée d'elle par au moins une autre couche ou au moins un autre élément.

On entend par un substrat, une couche à base d'une espèce A, un substrat, une couche comprenant cette espèce A uniquement ou cette espèce A et éventuellement d'autres espèces.

On entend par un paramètre « sensiblement égal/supérieur/inférieur à » une valeur donnée, que ce paramètre est égal/supérieur/inférieur à la valeur donnée, à plus ou moins 10 %, près de cette valeur. On entend par un paramètre « sensiblement compris entre » deux valeurs données que ce paramètre est au minimum égal à la plus petite valeur donnée, à plus ou moins 10 %, près de cette valeur, et au maximum égal à la plus grande valeur donnée, à plus ou moins 10 %, près de cette valeur.

Un repère, de préférence orthonormé, comprenant les axes X, Y, Z est représenté sur les figures annexées.

Il est précisé que dans le cadre de la présente invention, l'épaisseur d'une couche ou du substrat se mesure selon une direction perpendiculaire à la surface selon laquelle cette couche ou ce substrat présente son extension maximale. L'épaisseur est ainsi prise selon une direction perpendiculaire aux faces principales de la couche ou du substrat sur lequel repose les différentes couches. Plus particulièrement, l'épaisseur peut être prise selon la direction Z.

Dans la présente demande de brevet, le terme « solidaire » utilisé pour qualifier la liaison entre deux pièces signifie que les deux pièces sont liées/fixées l'une par rapport à l'autre, selon tous les degrés de liberté, sauf s'il est explicitement spécifié différemment. Par exemple, s'il est indiqué que deux pièces sont solidaires en translation selon une direction X, cela signifie que les pièces peuvent être mobiles l'une par rapport à l'autre, possiblement selon plusieurs degrés de liberté, à l'exclusion de la liberté en translation selon la direction X. Autrement dit, si on déplace une pièce selon la direction X, l'autre pièce effectue le même déplacement.

Dans la description détaillée qui suit, il pourra être fait usage de termes tels que « horizontal », « vertical », « longitudinal », « transversal », « supérieur », « inférieur », « haut », « bas », « avant », « arrière », « intérieur », « extérieur ». Ces termes doivent être interprétés de façon relative en relation avec la position normale du dispositif réflecteur et la propagation des faisceaux lumineux, et notamment du faisceau lumineux incident, relativement au dispositif réflecteur.

Les étapes du procédé s'entendent au sens large de la réalisation d'une partie du procédé et peuvent éventuellement être réalisées en plusieurs sous-étapes. Plusieurs modes de réalisation de l'invention mettant en œuvre des étapes successives du procédé de fabrication sont décrits ci-après. Sauf mention explicite, l'adjectif « successif » n'implique pas nécessairement, même si cela est généralement préféré, que les étapes se suivent immédiatement, des étapes intermédiaires pouvant les séparer.

Par ailleurs, le terme « étape » ne signifie pas obligatoirement que les actions menées durant une étape soient simultanées ou immédiatement successives. Certaines actions d'une première étape peuvent notamment être suivies d'actions liées à une étape différente, et d'autres actions de la première étape peuvent être reprises ensuite. Ainsi, le terme étape ne s'entend pas forcément d'actions unitaires et inséparables dans le temps et dans l'enchaînement des phases du procédé.

Dans le cadre de la présente invention, on qualifie de façon classique de résine un matériau organique ou organo-minéral pouvant être mis en forme par une exposition à un faisceau d'électrons, de photons ou de rayons X ou mécaniquement.

On peut citer à titre d'exemple des résines classiquement employées en microélectronique, des résines à base de polystyrène (PS), de méthacrylate (par exemple le Polymethyl methacrylate PMMA), d'Hydrosilsesquioxane (HSQ), de polyhydroxystyrène (PHS) etc. L'intérêt d'utiliser une résine est qu'il est facile d'en déposer une épaisseur importante, de plusieurs centaines de nanomètres à plusieurs micromètres.

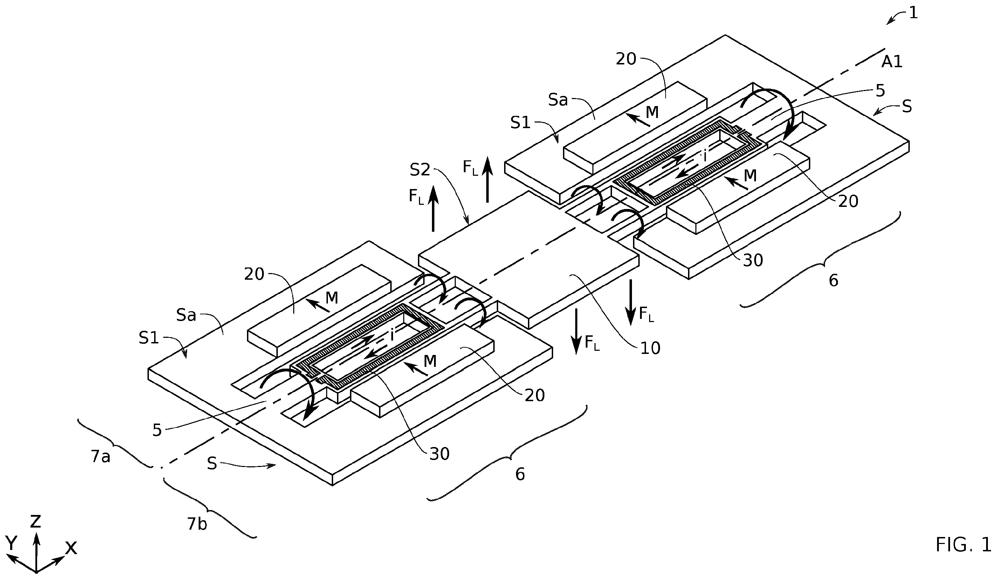

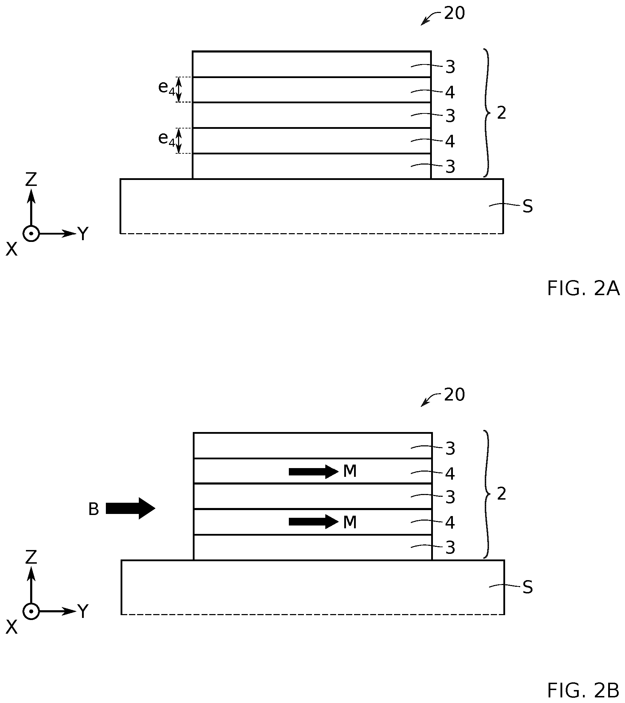

Un dispositif réflecteur 1 est maintenant décrit en référence aux figures 1, 2A et 2B, selon un exemple de réalisation.

La figure 1 illustre un dispositif réflecteur 1 à actionnement magnétique destiné à réfléchir un faisceau lumineux incident pour former un faisceau réfléchi se propageant dans une direction déterminée, typiquement vers une cible. Le dispositif réflecteur 1 comprend un substrat S s'étendant par exemple dans un plan XY défini par une direction X et une direction Y perpendiculaire à la direction X. Le substrat S comprend une première partie S1, et une deuxième partie S2 mobile par rapport à la première partie S1.

Un miroir 10 permettant la réception du faisceau incident et la formation du faisceau réfléchi, est disposé d'une façon solidaire sur la deuxième partie S2 du substrat S. Le miroir 10 est configuré de façon à être pivoté autour d'au moins un axe de rotation A1. L'axe de rotation A1 est défini par exemple selon la longueur de la deuxième partie S2 mobile qui s'étend selon la direction X de part et d'autre du miroir 10 pour rejoindre la première partie S1.

Le dispositif réflecteur 1, par exemple illustré en figure 1, peut comprendre au moins un module actionneur 6. Chaque module actionneur 6 comprend au moins un aimant 20 présentant une direction d'aimantation M, et au moins une ligne électrique 30. La ligne électrique 30 est à base d'un matériau électriquement conducteur 35 et est alimentée par un courant électrique i.

Le courant i traversant la ligne électrique 30 interagit avec le champ magnétique émanant de l'aimant 20 pour générer une force de Laplace $F_L$ dite « force motrice ». Cette force motrice $F_L$ permet d'actionner un pivotement de la deuxième partie S2, et donc du miroir 10 autour de l'axe de rotation A1. La direction de la force motrice $F_L$ est typiquement sensiblement perpendiculaire à la direction de l'aimantation **M,** et à la direction de circulation du courant i. De plus, le sens de la force motrice $F_L$ dépend de l'orientation de la direction de l'aimantation M ainsi que du sens du courant i. La direction de l'aimantation M étant de préférence fixe, le sens de la force motrice $F_L$ est déterminé par le sens du courant i traversant la ligne électrique 30. On comprend donc que le miroir 10 peut être entrainé en rotation dans un sens ou dans le sens opposé.

Le miroir 10 passe donc d'une position de repos, c'est-à-dire une position d'équilibre sans actionnement magnétique, à une position pivotée, en pivotant autour de l'axe de rotation A1. Une fois le miroir 10 entrainé en rotation, il peut être ramené à une position de repos. Ce retour à la position de repos peut être effectué par retour à la position d'équilibre, par arrêt de l'entrainement magnétique.

Typiquement la deuxième partie S2 du substrat est articulé en rotation avec la première partie S1 par le biais d'une charnière 5, et plus particulièrement une charnière 5 déformable en torsion autour de l'axe de rotation A1. De façon classique, cette charnière 5 peut comprendre une portion du substrat formant une barre déformable en torsion, reliant la première partie S1 et la deuxième partie S2 du substrat. Lors de l'actionnement magnétique, cette charnière 5 peut être déformée en torsion autour de l'axe de rotation A1 afin de permettre la rotation de la deuxième partie S2 du substrat et donc du miroir 10. Lorsque la force motrice n'est plus générée, l'effort en torsion de la charnière 5 peut entrainer le retour à la position d'équilibre.

Notons que dans la configuration du dispositif réflecteur 1 illustrée en figure 1, deux modules actionneurs 6 sont représentés. Selon l'exemple illustré, le dispositif réflecteur comprend deux modules actionneurs 6 disposés de part et d'autre du miroir 10 le long d'une direction parallèle à l'axe de rotation A1 du miroir 10, de façon à augmenter la résultante des forces motrices générées. L'entrainement en rotation du miroir 10 est donc facilité. Le pivotement du miroir 10 peut néanmoins être entraîné par un seul module actionneur 6. Par mesure de simplification et à titre non limitatif, un seul module actionneur 6 sera représenté dans les figures et les modes de réalisation décrits ci-dessous.

Comme illustré par exemple en figures 2A et 2B, l'aimant 20 comprend un empilement 2 d'au moins une bicouche selon une direction Z perpendiculaire aux directions X et Y. Chaque bicouche comprend une première sous-couche 3 à base, et de préférence faite, d'un matériau antiferromagnétique, et une deuxième sous-couche 4 à base, et de préférence faite, d'un matériau ferromagnétique. La superposition d'un matériau ferromagnétique à un matériau antiferromagnétique, donne lieu à une interaction d'échange entre les moments magnétiques à l'interface entre les premières sous-couches 3 et les deuxièmes sous-couches 4, qui fige les moments magnétiques, notamment dans les deuxièmes sous-couches 4 ferromagnétiques.

La deuxième sous-couche 4 peut être superposée à la première sous-couche 3. La superposition d'un matériau antiferromagnétique à un matériau ferromagnétique, améliore la résistance de l'aimant 20 aux chocs magnétiques. L'empilement 2 peut comprendre N bicouches, N étant un nombre entier compris entre 10 et 50. Les figures 2A et 2B montrent un exemple avec N=2.

L'empilement 2 est fabriqué par des techniques de dépôts de microélectroniques. Cela permet d'intégrer l'aimant 20 au dispositif réflecteur 1, en déposant l'empilement 2 sur le substrat S, de façon homogène avec le dépôt du miroir 10 et de la ligne électrique 30 lors du procédé de fabrication.

Suite au dépôt de l'empilement 2, la direction de l'aimantation M peut être définie au cours du procédé comme cela sera décrit en détail plus loin. Cette direction de l'aimantation M est de préférence prise dans le plan XY ce qui permet de générer une force motrice $F_L$ selon la direction Z.

Le module actionneur 6 décrit ci-dessus, comprenant au moins un aimant 20 et au moins une ligne électrique 30, peut être configuré de plusieurs façons. Selon un exemple, le module actionneur 6 est configuré de sorte que deux forces motrices s'exercent sur la deuxième partie S2 mobile du substrat, de sens opposé entre les deux bords opposés 7a, 7b, de la partie mobile S2 par rapport à l'axe de rotation A1. Ainsi, la rotation du miroir 10 est facilitée.

Pour cela, selon un premier mode de réalisation, une ligne électrique 30 formant une boucle ou une bobine est disposée sur la deuxième partie S2 mobile, et deux aimants 20 sont disposés sur la première partie S1 d'une part et d'autre de la partie S2 mobile, selon une direction perpendiculaire à l'axe de rotation A1. Plusieurs variantes de ce premier mode de réalisation qui seront décrites dans un premier temps, permettent notamment d'améliorer la génération de la force motrice $F_L$ et la compacité du dispositif réflecteur 1. Selon un deuxième mode de réalisation, deux lignes électriques 30 sont disposées sur la première partie S1, d'une part et d'autre d'un aimant disposé sur la partie S2 mobile, selon une direction perpendiculaire à l'axe de rotation A1. Ce deuxième mode de réalisation sera décrit dans un deuxième temps dans la description suivante.

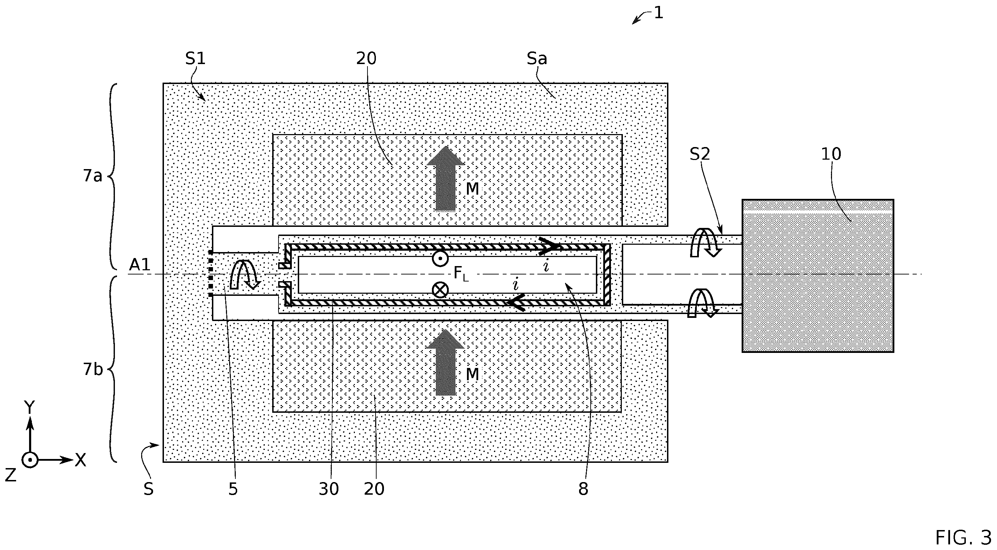

La figure 3 illustre une vue de dessus selon le plan XY d'un dispositif réflecteur 1, selon le premier mode de réalisation de la présente invention. La ligne électrique 30 peut former une boucle ou une bobine, de sorte que le courant i se propage dans la ligne électrique 30 sur une première partie de la boucle, disposée en regard d'un bord de la partie S2 mobile. Le courant i se propage donc dans un premier sens par rapport au dispositif réflecteur. Le courant i peut se propager dans la ligne électrique 30 sur une deuxième partie de la boucle, disposée en regard d'un bord opposé, par rapport à l'axe de rotation A1, de la partie S2 mobile. Le courant i se propage ainsi dans un deuxième sens par rapport au dispositif réflecteur, opposé au premier. Selon ce premier mode de réalisation, la ligne électrique 30 peut être disposée sur la deuxième partie S2 mobile du substrat S de façon solidaire au miroir 10. Deux aimants 20 présentant de préférence une même direction d'aimantation M, peuvent être disposés respectivement sur la première partie S1 de part et d'autre de la ligne électrique 30 selon une direction perpendiculaire à l'axe de rotation A1 du miroir 10. Le courant i interagit avec le premier aimant 20 de la première partie de la boucle pour générer une force motrice $F_L$ selon la direction Z selon un premier sens, puis interagit avec le deuxième aimant 20 de la deuxième partie de la boucle pour générer une force motrice $F_L$ selon un deuxième sens opposé au premier sens. Ces deux forces opposées entre elles, facilitent la rotation de la deuxième partie S2 mobile. L'inversion du sens de circulation du courant i dans la boucle, par rapport au dispositif réflecteur, induit une inversion du sens des deux forces motrices, ce qui permet un pivotement du miroir 10 autour de l'axe de rotation A1 dans un sens positif ou négatif par rapport à un axe perpendiculaire à l'axe de rotation A1. La figure 3 illustre un exemple de pivotement du miroir 10 autour de l'axe de rotation A1 défini selon la direction X, dans un sens négatif de la direction Y.

La disposition de la ligne électrique 30 sur la deuxième partie S2 mobile, permet en outre de réduire le poids de cette deuxième partie S2 mobile, ce qui facilite la rotation du miroir 10. Selon un exemple, la deuxième partie S2 mobile peut avantageusement présenter un évidement 8 autour duquel la ligne électrique 30 forme la boucle, ce qui permet de réduire en plus le poids de la deuxième partie S2 mobile.

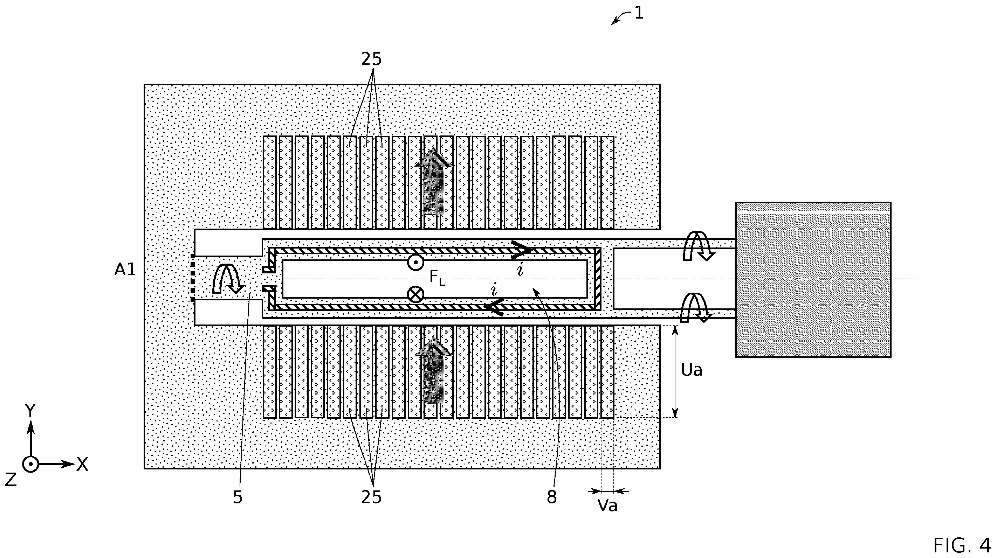

Selon une variante illustrée en figure 4, chaque aimant 20 peut comprendre une pluralité de sous-aimants 25 juxtaposés entre eux. Selon cet exemple, chaque sous-aimant 25 est en forme de barreau et comprend l'empilement 2 de bicouches décrit précédemment. Les sous-aimants 25 sont plus particulièrement juxtaposés selon la direction X, le long d'une direction sensiblement perpendiculaire à leur direction d'extension principale Y. Cette configuration permet de préserver un bon alignement des moments magnétiques de l'aimant 20 selon la direction principale de l'extension du barreau, lors de la fabrication. De par la forme longiligne des sous-aimants 25, l'aimantation M peut naturellement en effet s'aligner le long de leurs directions principales, c'est-à-dire la direction dans laquelle leur longueur $U_a$ est mesurée, lors de la fabrication de l'aimant 20 et plus particulièrement lorsqu'on effectue un traitement thermique. L'orientation de la direction d'aimantation M est fiabilisée, ce qui fiabilise l'actionnement du miroir 10. Les sous-aimants 25 sont de préférence sensiblement parallèles entre eux, et chaque sous-aimant 25 présente avantageusement un rapport d'aspect important avec une longueur $U_a$ selon la direction Y, sur une largeur $V_a$ selon la direction Y, de préférence $U_a / V_a \geq 10$.

Selon un exemple de réalisation, les sous-aimants 25 peuvent présenter des directions d'aimantation M distinctes entre eux. Ainsi, des forces de Laplace $F_L$ peuvent être générées dans différentes directions. Cela peut notamment permettre d'actionner une rotation du miroir 10 selon deux axes de rotations différents.

Selon un exemple non illustré, les sous-aimants 25 sont séparés par un matériau non magnétique, de préférence à base d'oxyde de silicium ($SiO_2$). Cela permet de former une matrice de sous-aimants 25 qui peut être superposées avec une pluralité de matrices de sous-aimants 25. La superposition des matrices de barreaux aimantés suivant la même direction d'aimantation M, permet d'augmenter l'aimantation effective de l'aimant.

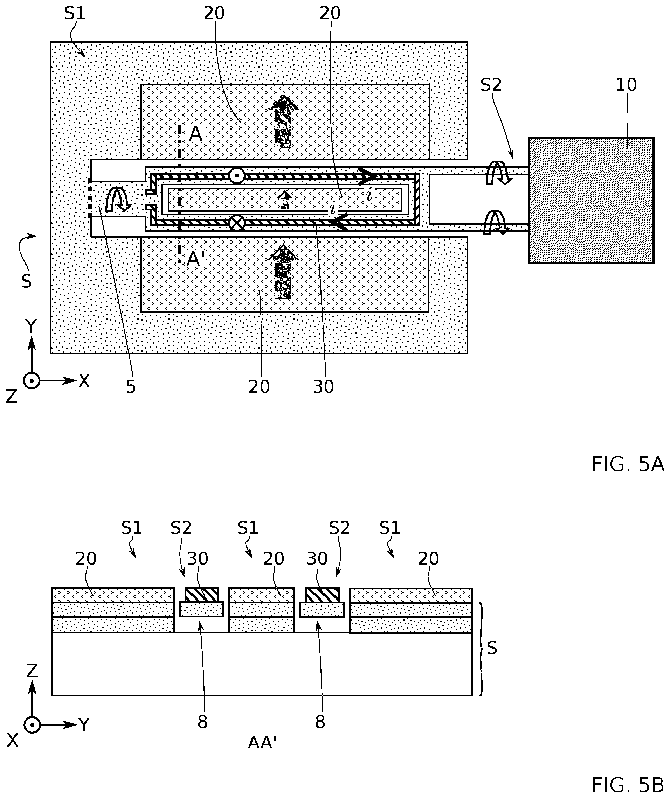

Comme illustré en figures 5A et 5B, selon un exemple, le dispositif réflecteur 1 peut comprendre en outre, un troisième aimant 20 solidaire de la première partie S1 du substrat S et disposé dans l'évidement 8. L'ajout d'un troisième aimant 20 au centre de la boucle électrique, permet d'augmenter l'intensité des forces de Laplace $F_L$ de sens opposés générées, ce qui facilite encore la mise en rotation du miroir 10. Des résultats de calculs réalisés en fonctions de différentes configurations du module actionneur 6, montrent l'effet de l'ajout d'un troisième aimant 20 sur l'intensité de la force motrice $F_L$. Ces résultats seront présentés plus loin dans la présente description.

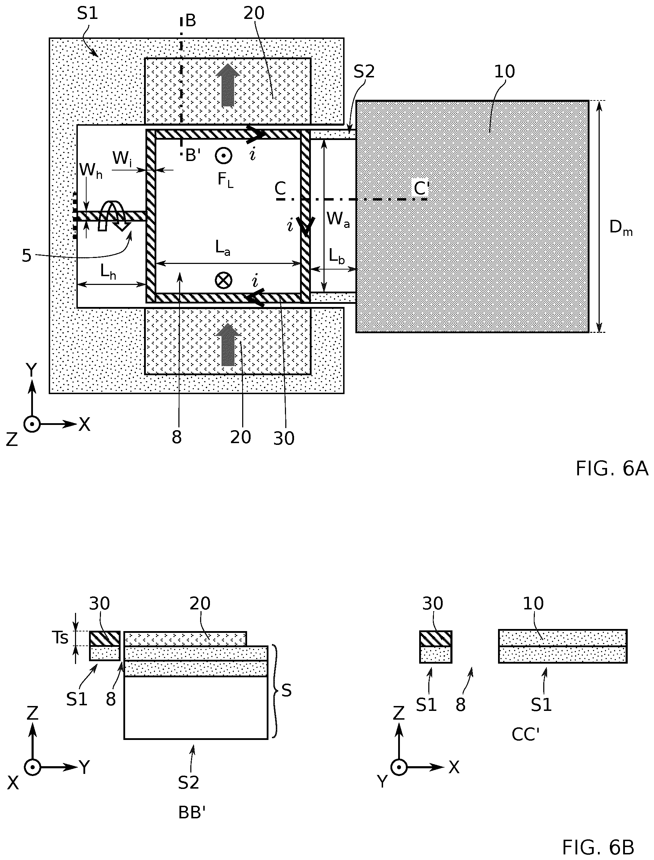

Les figures 6A et 6B illustrent un exemple de réalisation améliorant encore la compacité du dispositif réflecteur 1. Dans cet exemple, les dimensions de la deuxième partie S2 mobile sont réduites. En effet, l'évidement 8 dans cette partie s'étend jusqu'à l'aplomb de la ligne électrique 30, comme le montre des coupes transverses BB' et CC' selon les plans YZ et XZ, respectivement. Cela permet de réduire encore le poids de la deuxième partie S2 mobile ce qui facilite l'actionnement de rotation du miroir 10. On comprend que les dimensions des éléments composants le dispositif réflecteur 1 peuvent être ajustés selon les architectures envisagées.

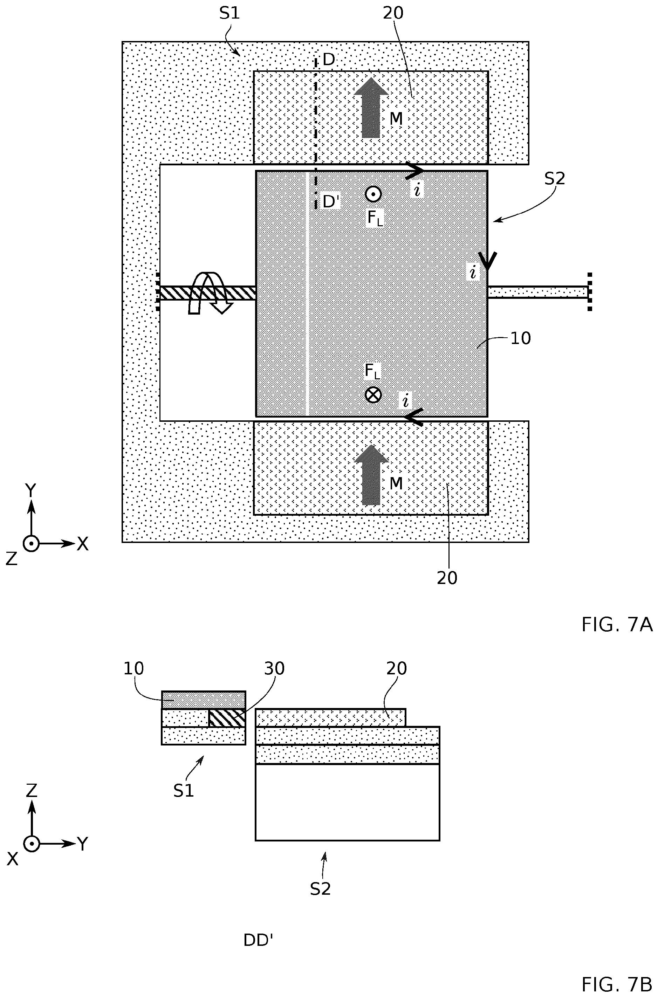

Comme illustré en figures 7A et 7B, selon un autre exemple, le miroir 10 peut être disposé en superposition avec la ligne électrique 30 comme le montre la coupe transverse DD' selon le plan YZ. Cela permet d'améliorer la compacité du dispositif réflecteur 1.

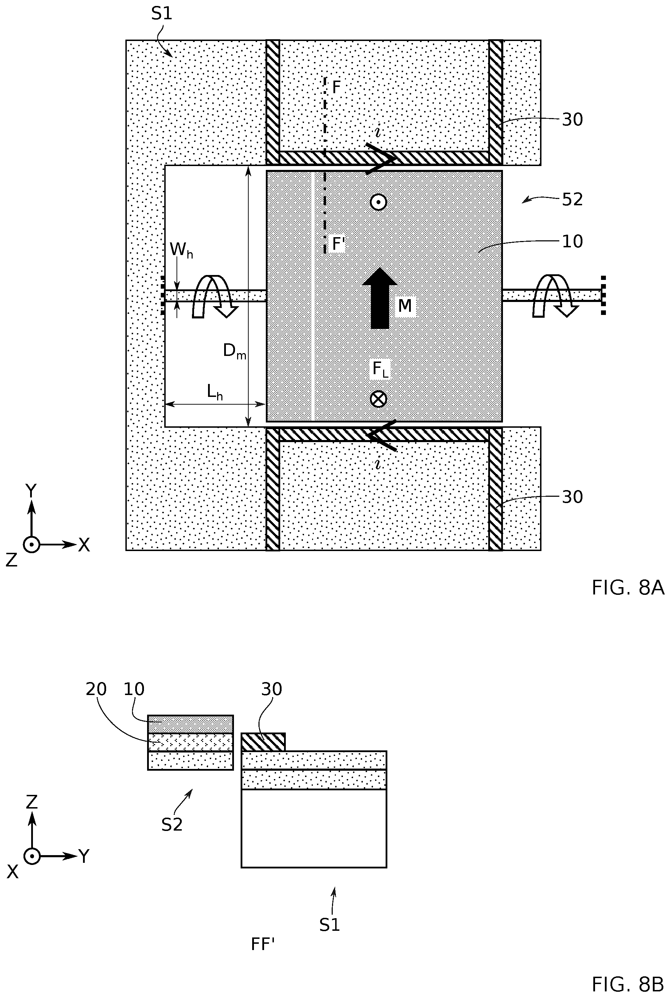

Les figures 8A et 8B illustrent une variante de réalisation de la présente invention. Selon cette variante, l'aimant 20 est disposé sur la deuxième partie S2 mobile du substrat S. Le miroir 10 peut plus particulièrement être superposé avec l'aimant 20, comme le montre la coupe transverse FF' selon le plan YZ. Deux lignes électriques 30 sont disposées de part et d'autre de l'aimant 20 par rapport à l'axe de rotation A1, sur la première partie S1. Un courant i circule dans chacune des lignes électriques 30 de part et d'autre de l'aimant 20, selon des sens opposés, de sorte que les forces de Laplace $F_L$ générées, sont de sens opposés.

Maintenant nous allons décrire les paramètres qui influent sur l'intensité de la force de Laplace $F_L$ générée par l'interaction entre le courant i et le champ magnétique émanant de l'au moins un aimant 20. De façon connue, l'intensité de $F_L$ suit l'équation suivante :

$$F_L = B \times i \times l$$

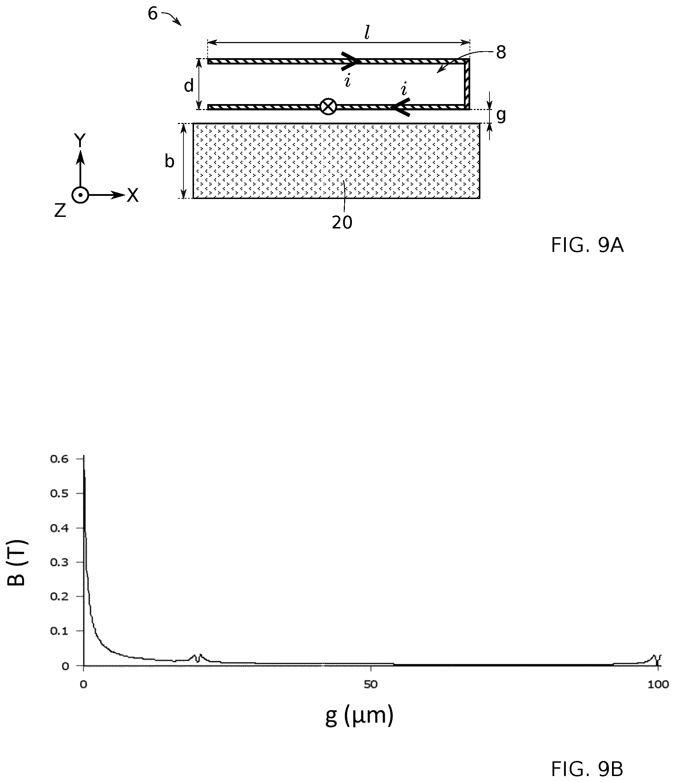

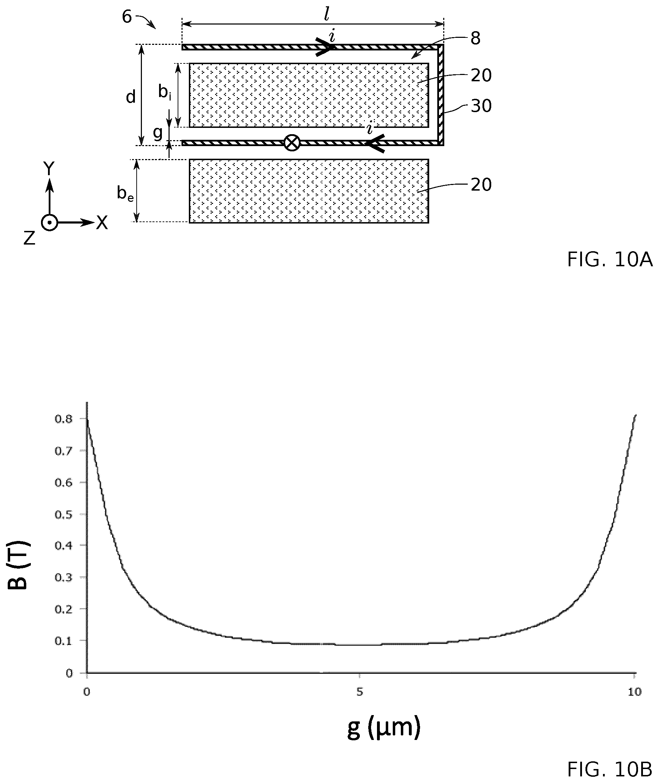

Où B représente l'intensité du champ magnétique produite par l'aimant 20 à une distance g entre la ligne électrique 30 et l'aimant 20 prise selon la direction Y, i représente l'intensité du courant i traversant la ligne électrique 30, et *l* représente la longueur de l'interaction entre le courant i et le champ magnétique, qui de préférence, correspond à la longueur de l'aimant 20. La force de Laplace $F_L$ dépend de cette distance g. Afin d'évaluer l'influence de la distance g sur l'intensité de la force $F_L$, des calculs ont été réalisés pour deux configurations différentes, illustrées en figures 9A et 10A.

La figure 9A illustre une première configuration dans laquelle un seul aimant 20 interagit d'une part avec la ligne électrique 30 en forme de boucle. Des calculs en fonction des paramètres présentés dans le tableau ci-dessous, en référence à la figure 9A, ont été réalisés. Dans les exemples présentés, afin de simuler un empilement 2 comprenant des sous-couches ferromagnétiques présentant une aimantation à saturation $M_s$ de l'ordre de 2.4 T et une épaisseur environ égale à celle des sous-couches antiferromagnétiques, un aimant permanent présentant une aimantation à saturation $M_s$ de l'ordre de 1.2 T remplace l'empilement 2 dans les calculs. A titre d'exemple, cet aimant permanent peut simuler un empilement 2 de 25 bicouches, comprenant des sous-couches antiferromagnétiques à base de PtMn présentant chacune une épaisseur autour de 20 nm, et des sous-couches ferromagnétiques à base de CoFe ayant une composition de 65% en Fe et 35% en Co, par exemple, et présentant chacune une épaisseur autour de 20 nm.

| Paramètres | Valeurs |
|---|---|
| Nombre d'aimants | 1 |
| Epaisseur d'un aimant | 1 $\mu$m |
| Intensité maximale du champ magnétique généré par l'aimant | 1.2 T |
| Largeur b de l'aimant selon la direction y | 200 $\mu$m |
| Longueur I de l'aimant selon la direction x | 5 mm |
| Nombre de lignes électriques | 1 |
| Epaisseur r de la ligne électrique selon la direction z | 1 $\mu$m |
| Dimension d de la ligne électrique selon la direction y | 100 $\mu$m |
| Intensité du courant électrique | 100 mA |

Les résultats des calculs montrent que la plupart de ces paramètres ont un impact proportionnel à leur valeur sur l'intensité de la force de Laplace $F_L$. L'épaisseur r de la ligne électrique 30 et la longueur I de l'aimant 20 ont un impact négligeable sur cette intensité. En revanche, ces paramètres r et I, ont un impact sur l'intensité maximale du courant i supportée par la ligne électrique 30, ce qui définit la limite de l'électromigration dans la ligne électrique. La distance g a par contre un fort impact sur l'intensité de la force motrice. La variation du champ magnétique B en fonction de la distance g est représentée dans le graphe de la figure 9B. En augmentant la distance g entre l'aimant 20 et la ligne électrique 30, l'intensité du champ magnétique produit par l'aimant 20 diminue exponentiellement. Cette variation drastique de l'intensité du champ magnétique en fonction de la distance g, présente un impact significatif sur l'intensité de la force de Laplace $F_L$. Plus l'aimant 20 et la ligne électrique 30 sont proches, plus la force de Laplace $F_L$ est importante, ce qui facilite l'actionnement du pivotement du miroir 10. De plus, cela permet la réduction de la consommation d'énergie, car pour une valeur d'intensité de courant i fixe, il suffit de réduire la distance g pour augmenter l'intensité de la force motrice $F_L$. D'après le graphe de la figure 9B, pour obtenir une force motrice $F_L$ significative, la distance g est de préférence inférieure ou égale à 7 $\mu$m, de préférence inférieure ou égale à 5 $\mu$m. Ces valeurs réduites de la distance g sont avantageusement atteignables grâce à l'intégration monolithique de l'aimant 20 et la ligne électrique 30. Pour une distance g égale à 5 $\mu$m, l'intensité de la force de Laplace $F_L$ calculée est autour de 20,5 $\mu$N. Dans le cas où deux aimants 20 sont disposés de part et d'autre de la partie mobile S2, la somme des forces en valeur absolue est donc de 41 $\mu$N.

La figure 10A illustre un exemple dans lequel deux aimants 20 interagissent avec le courant i traversant la ligne électrique 30 en forme de boucle. Le premier aimant 20 est disposé à l'extérieur de la boucle à une distance g de la ligne électrique 30. Le deuxième aimant 20 est disposé au centre de la boucle à la même distance g de la ligne électrique 30, par exemple dans un évidement 8 de la partie mobile S2 comme décrit précédemment. Des calculs en fonction des paramètres présentés dans le tableau ci-dessous, en référence à la figure 10A, ont été réalisés.

| Paramètres | Valeurs |
|---|---|
| Nombre d'aimants | 2 |
| Epaisseur d'un aimant | 1 $\mu$m |
| Intensité maximale totale des champs magnétiques générés par les aimants | 1,2 T |
| Dimension $b_e$ de l'aimant externe selon la direction y | 200 $\mu$m |
| Dimension $b_i$ de l'aimant externe selon la direction y | 100 $\mu$m |
| Longueur l de l'aimant selon la direction x | 5 mm |
| Nombre de lignes électriques | 1 |
| Epaisseur r de la ligne électrique selon la direction z | 1 $\mu$m |
| Dimension d de la ligne électrique selon la direction y | 100 $\mu$m |
| Intensité du courant électrique | 100 mA |

La variation du champ magnétique B en fonction de la distance g est représentée dans le graphe de la figure 10B. Ce graphe montre que pour cette configuration, afin d'obtenir une force motrice $F_L$ significative, la distance g a un impact significatif. De préférence, la distance g est de préférence inférieure ou égale à 7 $\mu$m, de préférence inférieure ou égale à 5 $\mu$m. Pour une distance g égale à 5 $\mu$m, l'intensité de la force $F_L$ calculée pour une même intensité de courant i que pour celle de la configuration précédente, est autour de 82 $\mu$N. Cela montre qu'en rajoutant un aimant 20 à l'intérieur de la boucle, l'intensité de la force $F_L$ est significativement augmentée. Dans le cas où deux aimants 20 sont disposés de part et d'autre de la partie mobile S2, la résultante des forces est donc de 164 $\mu$N.

Pour chacun des deux modes de réalisations décrits précédemment, un jeu de dimensions de la deuxième partie S2 mobile est représenté dans les tableaux ci-dessous. L'optimisation de ces dimensions permet d'optimiser la fréquence de résonance de rotation du miroir 10 et le déplacement statique maximal du miroir 10 par rapport à sa position d'équilibre.

Selon le premier mode de réalisation et en référence à l'exemple du dispositif réflecteur illustré en figures 6A et 6B, la deuxième partie S2 mobile peut comprendre :

- Un support du miroir 10 d'une dimension Dm suivant la direction Y,
- Un support de la ligne électrique 30 présentant un évidement 8, une dimension La suivant la direction X, une section Wi suivant la direction X et une épaisseur Ts suivant la direction Z,

- Une charnière 5 reliant le support de la ligne électrique 30 à la première partie S1 du substrat S, présentant une longueur Lh selon la direction X et une largeur Wh selon la direction Y,
- Deux barres séparées entre elles d'une distance Wa selon la direction Y, reliant le support de la ligne électrique 30 au support du miroir 10, présentant une longueur Lb suivant la direction X.

Le tableau suivant présente des exemples de valeurs des dimensions citées ci-dessus :

| Paramètre | Gamme de valeurs | Valeur optimale |
|---|---|---|
| $W_h$ | 5 $\mu$m≤$W_h$≤20 $\mu$m | 10 $\mu$m |
| $W_i$ | 10 $\mu$m≤$W_h$≤100 $\mu$m | 50 $\mu$m |
| $L_h$ | 50 $\mu$m≤$L_h$≤1000 $\mu$m | 500 $\mu$m |
| $L_a$ | 500 $\mu$m≤$L_a$≤2000 $\mu$m | 1000 $\mu$m |
| $L_b$ | 10 $\mu$m≤$L_b$≤100 $\mu$m | 50 $\mu$m |
| $T_s$ | 5 $\mu$m≤$T_s$≤20 $\mu$m | 11 $\mu$m |
| $W_a$ | 500 $\mu$m≤$W_a$≤2000 $\mu$m | 1500 $\mu$m |

La valeur optimale de la dimension $D_m$ dépend des spécifications optiques du dispositif réflecteur 1. A titre d'exemple, $D_m$ peut être égale à 2000 μm. Comme décrit précédemment, l'intensité de la force de Laplace $F_L$ dépend des paramètres du module actionneur 6. A titre d'exemple, l'intensité de $F_L$ peut être égale à 50 μN. Pour les valeurs optimales des paramètres présentés dans le tableau ci-dessus et pour les exemples de valeurs de $D_m$ et de $F_L$ données, la fréquence de résonance en torsion est autour de 500 Hz, et le déplacement statique du miroir par rapport à sa position d'équilibre est de ±10°.

En référence à l'exemple du dispositif réflecteur illustré en figures 8A et 8B, la deuxième partie S2 mobile peut comprendre :

- Un support du miroir 10, d'une dimension Dm suivant la direction Y, le miroir 10 étant superposé à l'aimant 20,
- Une charnière 5 reliant le support du miroir 10 à la première partie S1 du substrat S, présentant une longueur Lh selon la direction X, une largeur Wh selon la direction Y et une épaisseur ts suivant la direction Z.

Le tableau suivant présente des exemples de valeurs des dimensions citées ci-dessus :

| Paramètre | Gamme de valeurs | Valeur optimale |
|---|---|---|
| $W_h$ | 5 μm≤$W_h$≤20 μm | 10 μm |
| $L_h$ | 50 μm≤$L_h$≤1000 μm | 500 μm |
| $t_s$ | 5 μm≤$t_s$≤20 μm | 11 μm |

Pour les valeurs optimales des paramètres présentés dans le tableau ci-dessus et pour $D_m$ égale à 2000 μm et $F_L$ égale à 50 μN, la fréquence de résonance en torsion est autour de 580 Hz, et le déplacement statique du miroir par rapport à sa position d'équilibre est de ±13°.

Notons que les mêmes paramètres peuvent être considérés pour la configuration illustrée en figures 7A et 7B. Dans cette configuration, la masse de la deuxième partie S2 mobile est plus légère, la ligne électrique 30 étant plus légère que l'aimant 20, ce qui diminue la fréquence de résonnance en torsion.

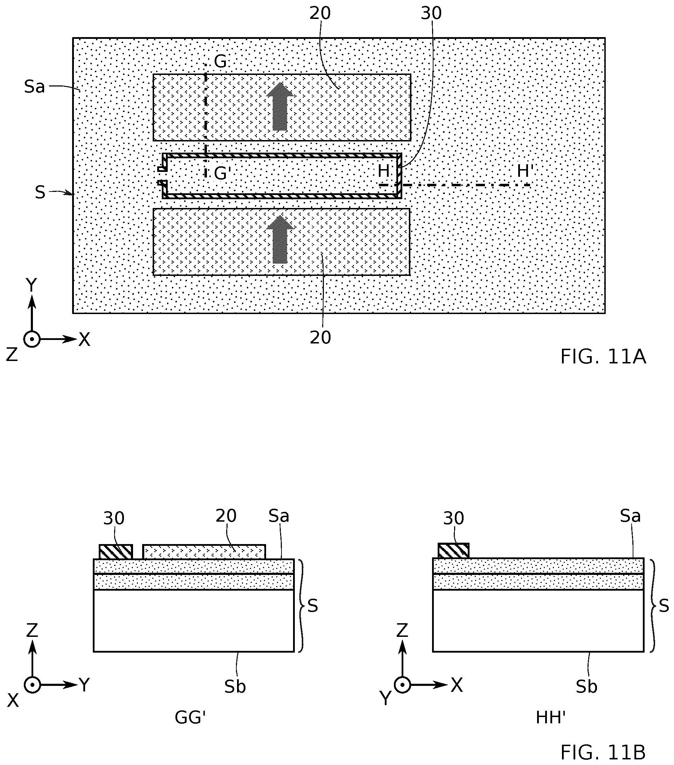

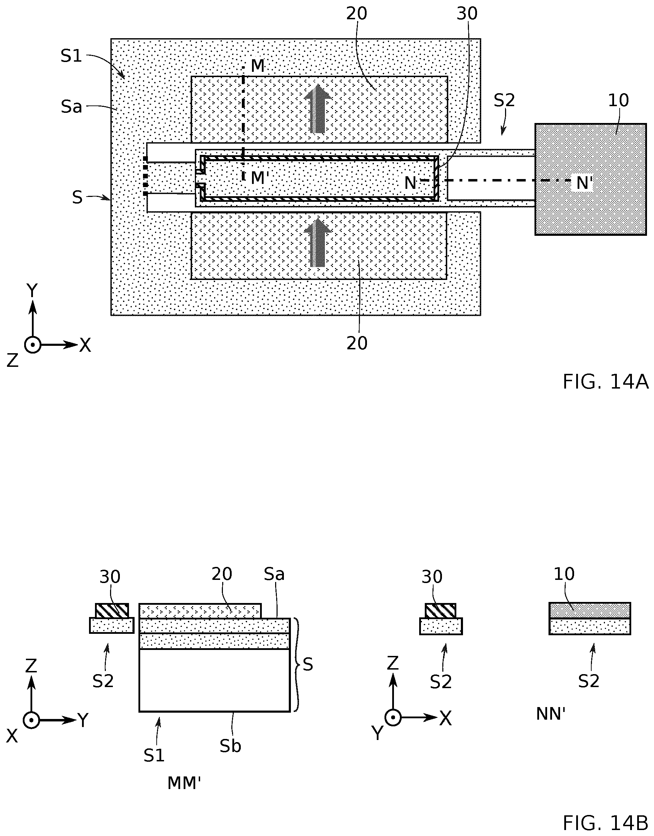

Le procédé de fabrication d'un dispositif réflecteur 1 est décrit dans ce qui suit, selon plusieurs exemples particuliers de réalisation. Par mesure de simplification, seules les étapes de fabrication d'un dispositif réflecteur 1, selon la première configuration du premier mode de réalisation, sont illustrées schématiquement en figures 11A, 11B à 14A, 14B. L'homme du métier adaptera sans difficultés ces figures pour visualiser les différentes étapes du procédé de fabrication du dispositif réflecteur 1 selon les autres variantes.

Comme illustré en figure 11A et 11B, une étape du procédé est de fournir un substrat S s'étendant suivant un plan parallèle au plan XY, et présentant une face supérieure Sa et une face inférieure Sb. Le substrat S peut être un substrat de type SOI (Silicium-sur-Isolant). Ces substrats connus, comprennent, selon la terminologie courante pour l'homme du métier, un substrat silicium porteur « Si bulk » (ou silicium massif) et une couche d'oxyde de silicium dite « BOX » (Buried Oxide, ou oxide enterré).

Un module actionneur 6 est ensuite formé sur la face supérieure Sa du substrat S. La formation du module actionneur 6 comprend un dépôt d'un aimant 20, en déposant un empilement 2 de N bicouches comprenant une première sous-couche 3 et une deuxième sous-couche 4 à base de matériaux antiferromagnétique et ferromagnétique respectivement, comme illustré en figure 2A.

Suite à son dépôt, l'empilement 2 est soumis à un traitement thermique sous l'application d'un champ magnétique, comme illustré en figure 2B. Le traitement thermique est souvent réalisé à une température supérieure à une température dite de « blocage ». Au-delà de la température de blocage, l'interaction d'échange entre la première sous-couche 3 antiferromagnétique et la deuxième sous-couche 4 ferromagnétique disparaît. Cela permet de réorienter les moments magnétiques dans le matériau ferromagnétique selon l'orientation du champ magnétique externe appliqué. Après la réalisation du traitement thermique et le refroidissement de l'empilement 2 à une température inférieure à la température de blocage, l'interaction d'échange est rétablie, et les moments magnétiques dans le matériau ferromagnétique sont figés selon la direction souhaitée, qui de préférence, est dans le plan d'extension principale de la bicouche. Le recuit thermique est réalisé de préférence en conservant une intensité du champ magnétique externe supérieure ou égale à 1 T dans la direction souhaitée pendant toute la durée du recuit, y compris le refroidissement. Le recuit thermique peut être réalisé juste après le dépôt de l'aimant ou plus tard. De préférence, le recuit thermique peut être réalisé à la fin du procédé.

La température de blocage peut donc correspondre à la température de mise en ordre du matériau antiferromagnétique lorsque le matériau antiferromagnétique est non-ordonné magnétiquement. Un matériau antiferromagnétique non-ordonné ne présente pas de couplage d'échange après dépôt sur un matériau ferromagnétique. Cette température de blocage est plus particulièrement la température au-delà de laquelle il n'y a plus de couplage d'échange entre un matériau antiferromagnétique et un matériau ferromagnétique en contact lorsque le matériau antiferromagnétique est ordonné magnétiquement. Cela peut être la température de Néel c'est-à-dire la température au-dessus de laquelle le matériau antiferromagnétique devient paramagnétique. Cette température de blocage est typiquement au-dessus de 250°C pour un matériau antiferromagnétique non ordonné. Pour un matériau antiferromagnétique AF ordonné la température de blocage est typiquement entre 150°C et 250°C.

La formation du module actionneur 6 comprend en outre une formation d'une ligne électrique 30 sur la face supérieure Sa du substrat S par dépôt d'un matériau électriquement conducteur 35. Le matériau électriquement conducteur 35 peut être à base d'un métal, tel que l'aluminium ou le cuivre, de préférence à base de cuivre.

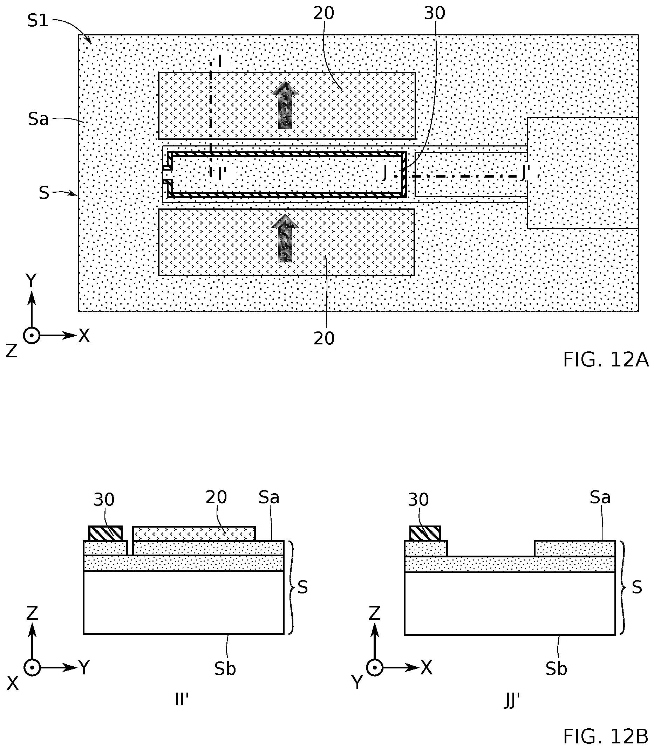

Comme illustré en figures 12A et 12B, une première gravure partielle à partir de la face supérieure Sa du substrat S est ensuite réalisée. Cette première gravure permet le retrait d'une partie du substrat S de façon à séparer l'aimant 20 et la ligne électrique 30, et à définir une première partie S1 et une deuxième partie S2 dans le substrat S. La charnière 5 peut au moins en partie être définie lors de cette gravure.

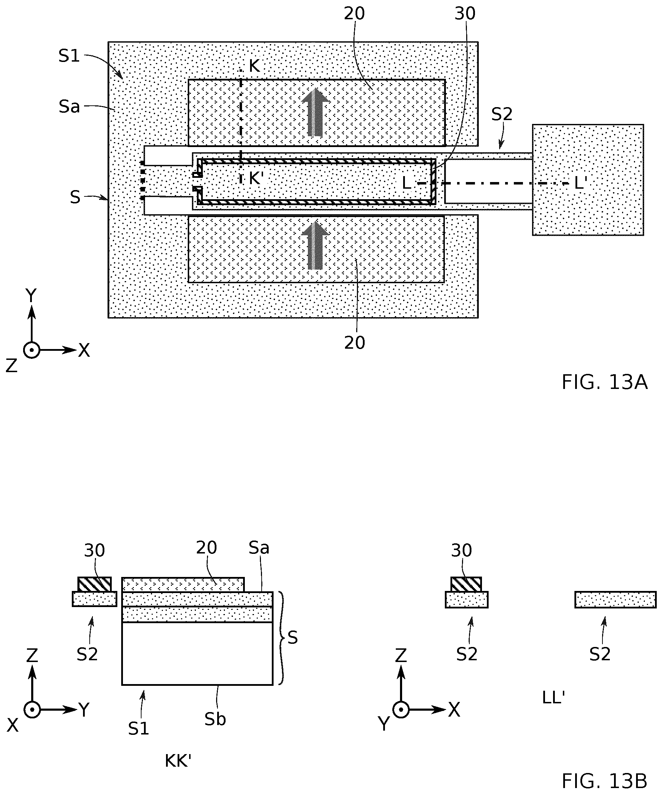

Comme illustré en figures 13A et 13B, une deuxième gravure peut être réalisée à partir de la face inférieure Sb du substrat S. Cette deuxième gravure permet une désolidarisation partielle de la deuxième partie S2 du substrat afin de lui attribuer un degré de liberté permettant de la faire pivoter autour d'un axe de rotation A1 qui s'étend selon la longueur de la partie S2. Cette désolidarisation partielle peut être permise notamment par la charnière 5. Les coupes transverses KK' et LL' illustrées en figure 13B selon les plans YZ et XZ respectivement, montrent la séparation de la deuxième partie S2 de la première partie S1, la deuxième partie S2 mobile étant surmontée de la ligne électrique 30 selon le premier mode de réalisation. Notons qu'en réalité, le substrat S présente de préférence une continuité de couche entre les parties S1 et S2, par le biais de la charnière 5 déformable en torsion. La première et la deuxième gravure peuvent être des gravures sèches, de préférence des gravures ioniques réactives (RIE ou « Reactive Ion Etching » en anglais).

Comme illustré en figures 14A et 14B, un miroir 10 est formé sur la deuxième partie S2 mobile du substrat S, par un dépôt d'une couche réfléchissante. Cette couche réfléchissante peut être à base d'un matériau métallique, de préférence à base d'or (Au) ou d'aluminium (Al). Elle peut aussi comprendre un empilement de Bragg. Les dimensions du miroir 10 dépendent des spécifications optiques du dispositif réflecteur 1. Le miroir 10 peut présenter par exemple des dimensions latérales dans le plan XY de 2 mm*2 mm, et une épaisseur selon la direction Z de 10 $\mu$m.

La formation de l'empilement 2 peut être réalisée par un dépôt physique en phase vapeur (PVD ou « Physical Vapor Depostion » selon la terminologie anglaise). Ce type de dépôt permet de simplifier l'intégration de l'aimant 20 au dispositif réflecteur 1.

Le nombre N de bicouches de l'empilement 2 détermine l'épaisseur totale de l'aimant 20. L'empilement 2 peut présenter une épaisseur comprise entre 700 nm et 5 $\mu$m, de préférence entre 900 nm et 2 $\mu$m, et plus préférentiellement encore égale à 1 $\mu$m. La longueur de l'aimant dans le plan XY peut être de l'ordre de 5 mm. Sa largeur dans le plan XY peut être supérieure ou égale à 200 $\mu$m, de préférence strictement supérieure à 200 $\mu$m selon l'exemple de sous-aimants 25 en forme de barreaux.

L'épaisseur magnétique effective de l'aimant 20 est la somme des épaisseurs de toutes les deuxièmes sous-couches 4 ferromagnétiques. En effet, le matériau antiferromagnétique présente des moments magnétiques sensiblement compensés, et par conséquent, ne produit pas un champ magnétique, ou produit un champ magnétique extrêmement faible. Ce sont principalement les moments magnétiques présents dans le matériau ferromagnétique qui contribuent à l'aimantation effective de l'aimant 20. La deuxième sous-couche 4 présente une épaisseur $e_4$ comprise entre 2 nm et 40 nm, de préférence entre 20 nm et 40 nm.

L'épaisseur magnétique effective peut être sensiblement comprise entre 350 nm et 2,5 $\mu$m, de préférence entre 450 nm et 1 $\mu$m, et plus préférentiellement encore peut être sensiblement égale à 0,5 $\mu$m, selon le nombre de deuxièmes sous-couches 4 ferromagnétiques.

Le matériau ferromagnétique peut être à base d'un matériau magnétique doux, ayant une forte aimantation à saturation $M_s$, typiquement supérieure à 1000 emu/cm$^3$. Le matériau ferromagnétique peut être par exemple à base d'un alliage de fer (Fe), de cobalt (Co) et de nickel (Ni). De préférence, le matériau ferromagnétique est à base de CoFe.

Le matériau antiferromagnétique peut être à base d'un alliage comprenant du manganèse (Mn), par exemple du type NiMn, PdPtMn, FeMn ou à base de NiO ou de Fe$_2$O$_3$. Le matériau antiferromagnétique est de préférence à base de PtMn ou de IrMn.

La composition du matériau ferromagnétique en CoFe permet de contrôler l'aimantation à saturation $M_s$ de l'aimant 20. Le matériau ferromagnétique peut être plus riche en cobalt (Co) qu'en fer (Fe). Cela permet d'améliorer l'interaction d'échange entre les première sous-couches 3 antiferromagnétiques et les deuxièmes sous-couches 4 ferromagnétiques, et par conséquent, d'améliorer la résistance de l'aimant 20 aux chocs magnétiques. En revanche, cela a tendance à diminuer l'aimantation à saturation $M_s$. Pour une composition de 20% en Fe et 80% en Co, $M_s$ peut être autour de 1,8 T.

Le matériau ferromagnétique peut être plus riche en fer (Fe) qu'en cobalt (Co). Cela permet d'augmenter l'aimantation à saturation $M_s$. En revanche, cela a tendance à diminuer l'interaction d'échange entre les première sous-couches 3 antiferromagnétiques et les deuxièmes sous-couches 4 ferromagnétiques. Pour une composition de 65% en Fe et 35% en Co, $M_s$ peut être autour de 2,4 T.

La composition du matériau antiferromagnétique est choisie de façon à améliorer l'interaction d'échange entre les sous-couches antiferromagnétiques et ferromagnétiques. Cette composition peut être par exemple, de 50%±5% en platine (Pt) et de 50%±5% en manganèse (Mn), ou de 20%±5% en iridium (Ir) et de 80%±5% en manganèse (Mn).

Pour un empilement 2 à base de PtMn, le traitement thermique peut être réalisé à une température comprise entre 290°C et 400°C, de préférence autour de 320°C. Pour un empilement 2 à base de IrMn, le traitement thermique peut être réalisé à une température comprise entre 265°C et 350°C, de préférence autour de 280°C. Le recuit thermique peut être réalisé pendant une durée supérieure ou égale à 1 heure.

L'empilement 2 peut être formé de sorte que chaque deuxième sous-couche 4 ferromagnétiques est située entre deux premières sous-couches 3 antiferromagnétiques, ce qui permet d'améliorer l'interaction d'échange. Cela peut être réalisé en rajoutant une sous-couche antiferromagnétique additionnelle sur les N bicouches de l'empilement 2.

Chacune des premières sous-couche 3 antiferromagnétiques peut présenter une épaisseur comprise entre 2 nm et 50 nm, de préférence autour de 20 nm pour un matériau antiferromagnétique à base de PtMn, et de préférence autour de 8 nm pour un matériau antiferromagnétique à base de IrMn.

L'empilement 2 peut comprendre une couche préliminaire, sur laquelle les bicouches magnétiques sont déposés. La sous-couche préliminaire peut être à base de tantale (Ta). Cette sous-couche préliminaire peut présenter une épaisseur autour de 5 nm.

L'orientation du champ magnétique appliqué lors du traitement thermique est choisie en fonction de l'aimantation M de l'aimant 20 souhaitée. Selon un exemple, et notamment lorsque le dépôt de l'empilement est configuré de façon à former des sous-aimants 25 juxtaposés et en forme de barreaux, le champ magnétique appliqué présente une direction qui fait un angle de 45° avec les directions X et Y. Cela permet d'obtenir à la fin du traitement thermique deux directions d'aimantations perpendiculaires. Le champ magnétique appliqué présente préférentiellement une intensité supérieure ou égale à 1 T. Selon l'exemple dans lequel la direction du champ magnétique fait un angle de 45° avec les directions X et Y, l'intensité du champ magnétique supérieure ou égale à 1 T est appliquée de préférence pendant une montée en température du recuit thermique ainsi que pendant un plateau de température constante. L'intensité du champ magnétique est ensuite diminuée jusqu'à une valeur comprise entre 20 Oe (soit 1591,54 A/m) et 300 Oe (soit 23873,24 A/m) lors d'une descente en température de recuit. Cela permet à l'anisotropie de forme de fixer les aimantations dans les directions souhaitées.

L'empilement 2 peut comprendre en outre une couche d'encapsulation qui permet de protéger les bicouches magnétiques. Cette couche d'encapsulation peut comprendre une sous-couche à base de tantale (Ta) présentant par exemple une épaisseur de 5 nm, et une sous-couche à base de ruthénium (Ru) présentant par exemple une épaisseur de 8 nm.

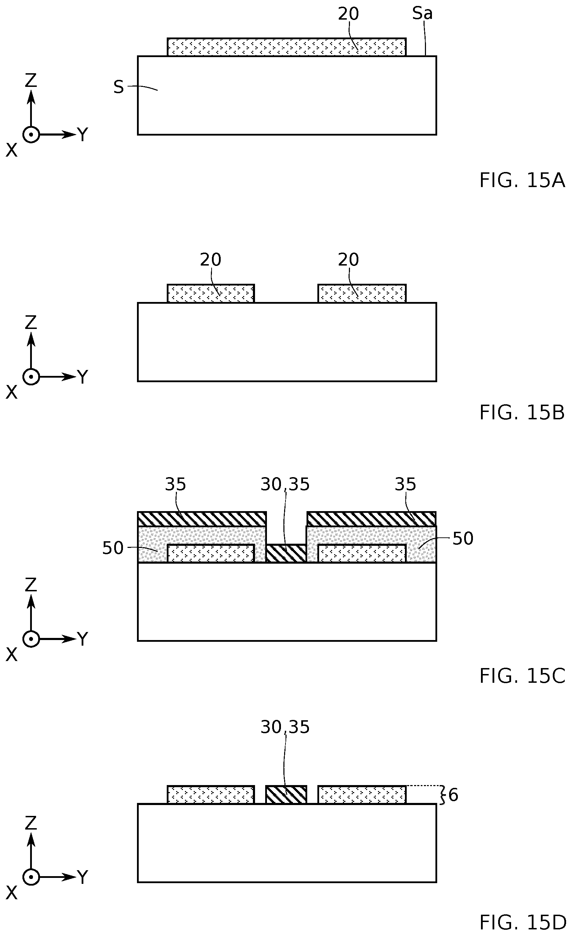

Les paragraphes suivants de la présente description, décrivent des exemples de fabrication du module actionneur 6 selon le premier mode de réalisation, en référence aux figures 15A-15D, 16A-16F et 17A-17I. L'homme du métier adaptera sans difficultés ces figures pour visualiser les différentes étapes de fabrication du module actionneur 6 selon le deuxième mode de réalisation.

Une première étape de fabrication du module actionneur 6, commune à tous les exemples décrits ci-dessous, illustrée en figures 15A et 15B, peut comprendre les sous-étapes suivantes :

- Le dépôt de l'empilement 2 sur le substrat S, comme illustré en figure 15A ;
- Le dépôt d'un masque dur à base d'oxyde sur l'aimant (empilement 2), non illustré ;
- Une formation par lithographie d'une ouverture à travers le masque dur, de préférence par gravures ioniques réactives (RIE) ;
- Une gravure de l'empilement 2 à travers l'ouverture dans le masque de façon à former deux premiers aimants 20 distincts comme illustré en figure 15B, cette gravure est de préférence réalisée par faisceau d'ions (IBE ou « Ion Beam Etching » en anglais) ;

Les deux aimants 20 formés sont séparés par un espace exposant des flancs internes des deux premiers aimants 20 et la face supérieure Sa du substrat S. Le masque dur à base d'oxyde peut être conservé sur les aimants afin de les protéger.

Comme illustré en figure 15C, suite à la formation des aimants 20 séparés, selon un premier exemple de réalisation du module actionneur 6, une couche de résine 50 est déposée sur les deux premiers aimants 20 de façon à couvrir la surface et les flancs internes des deux premiers aimants 20 et à définir un motif destiné à la formation de l'au moins une ligne électrique 30 entre les deux premiers aimants 20. Le matériau électriquement conducteur 35 est ensuite déposé dans le motif défini dans l'étape précédente, pour former l'au moins une ligne électrique 30. Un retrait de la couche de résine 50 est réalisé après le dépôt du matériau électriquement conducteur 35.

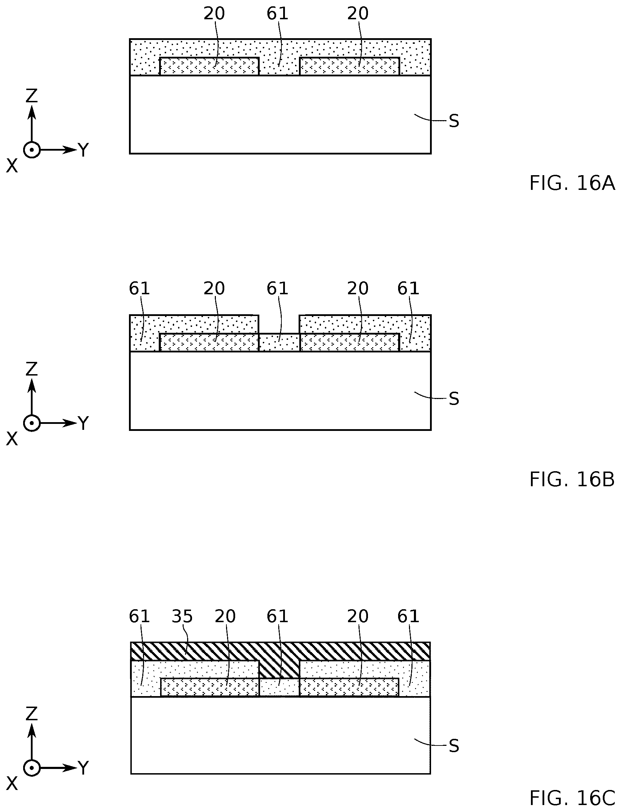

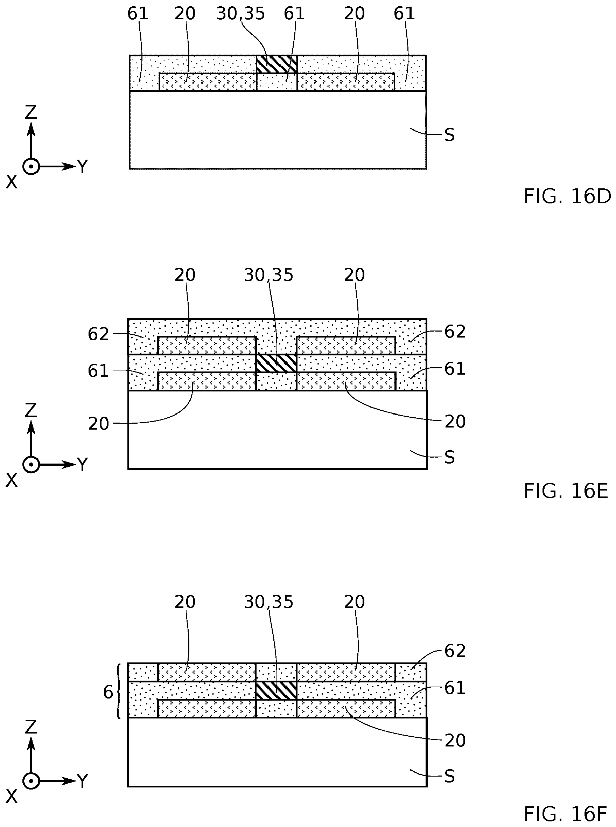

Comme illustré en figures 16A-16F, selon un deuxième exemple de réalisation du module actionneur 6, une première couche d'oxyde 61 est déposée sur les deux premiers aimants 20 de façon à couvrir la surface et les flancs des deux premiers aimants 20, et à combler au moins en partie, et de préférence entièrement, l'espace entre les deux premiers aimants 20. Une gravure partielle de la première couche d'oxyde 61 est ensuite réalisée à l'aplomb de l'espace entre les deux premiers aimants 20, sensiblement jusqu'au plan comprenant la face supérieure des deux premiers aimants 20, afin de former un motif destiné à la formation de l'au moins une ligne électrique 30. Une couche de matériau électriquement conducteur 35 est ensuite déposée sur la première couche d'oxyde 61, afin de combler au moins en partie, et de préférence entièrement, le motif défini dans l'étape précédente, pour former l'au moins une ligne électrique 30. La couche de matériau électriquement conducteur 35 est ensuite planarisée jusqu'à sensiblement atteindre la première couche d'oxyde 61. Deux deuxièmes aimants 20 distincts peuvent être formés au-dessus de la première couche d'oxyde 61, et à l'aplomb des deux premiers aimants 20. Une deuxième couche d'oxyde 62 peut être déposée de façon à couvrir la surface et les flancs des deux deuxièmes aimants 20, et à combler au moins en partie, et de préférence entièrement, l'espace entre les deux deuxièmes aimants 20. La deuxième couche d'oxyde 62 peut être planarisée de façon à exposer la face supérieure des deux deuxièmes aimants 20. L'empilement des aimants 20 permet d'augmenter l'aimantation à saturation $M_s$ ce qui permet de faciliter l'actionnement de la rotation du miroir 10.

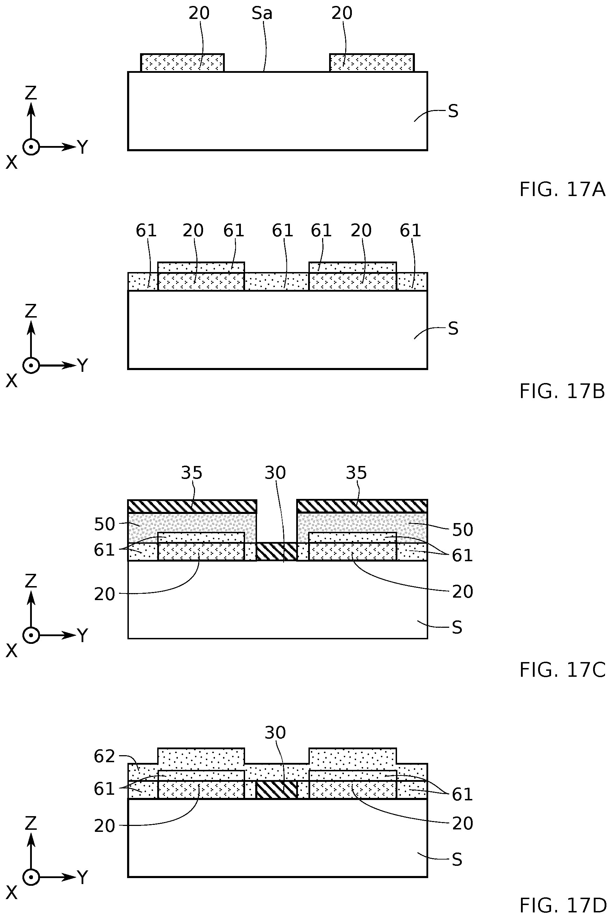

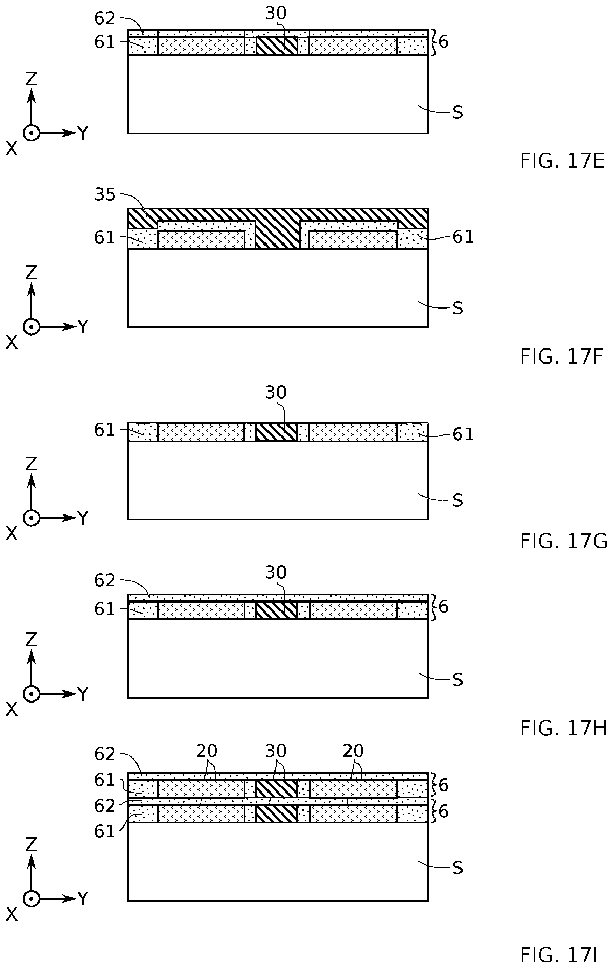

Comme illustré en figures 17A-17E, selon un troisième exemple de réalisation du module actionneur 6, une première couche d'oxyde 61 est déposée sur la face supérieure Sa du substrat S, de façon à couvrir la surface et les flancs des deux premiers aimants 20, et à combler au moins en partie, et de préférence entièrement, l'espace entre les deux premiers aimants 20. Une gravure de la première couche d'oxyde 61 est ensuite réalisée entre les deux premiers aimants 20 de façon à exposer la face supérieure Sa du substrat S sous-jacente, et de préférence exposer les flancs internes des deux premiers aimants 20. Une couche de résine 50 est ensuite déposée sur les premiers aimants 20, de façon à définir un motif entre les deux premiers aimants 20 séparé des flancs internes des deux premiers aimants 20, destiné à la formation de la ligne électrique 30. Le dépôt de la couche de résine 50 sur les premiers aimants 20 peut par exemple être configuré de façon à couvrir au moins les flancs internes des deux premiers aimants 20. Le matériau électriquement conducteur 35 est ensuite déposé dans le motif défini dans l'étape précédente, pour former la ligne électrique 30. La couche de résine 50 est ensuite retirée, et une deuxième couche d'oxyde 62 est déposée de façon à combler au moins en partie, et de préférence entièrement, l'espace entre la ligne électrique 30 formée et les deux premiers aimants 20. La deuxième couche d'oxyde 62 peut être planarisée sans exposition des surfaces des aimants 20. Un premier module actionneur 6 formé à la fin de cet exemple, peut être reproduit en suivant les mêmes étapes décrites en référence aux figures 17A-17E, afin de former un deuxième module actionneur 6 superposé au premier, comme illustré en figure 17I.

De façon plus générale, on comprend que les modules actionneurs 6 peuvent donc être superposés dans le dispositif réflecteur 1. La superposition des modules actionneurs 6, notamment des aimants 20, permet d'augmenter l'aimantation à saturation $M_s$ effective, ce qui permet de faciliter l'actionnement de la rotation du miroir 10.

Selon un autre exemple, comme illustré en figures 17F-17I, la première couche d'oxyde 61 peut être partiellement gravée entre les deux premiers aimants 20 de façon à exposer au moins en partie la face supérieure Sa du substrat S, sans exposer les flancs internes des deux premiers aimants 20, et de définir un motif destiné à la formation de la ligne électrique 30. Le matériau électriquement conducteur 35 est ensuite déposé dans le motif défini dans l'étape précédente, pour former la ligne électrique 30. La couche de matériau électriquement conducteur 35 peut être planarisée, de préférence sans exposer la face supérieure des deux premiers aimants 20, et une deuxième couche d'oxyde 62 peut être déposée, de façon à couvrir les deux premiers aimants 20 et la ligne électrique 30. Un premier module actionneur 6 formé à la fin de cet exemple, peut être reproduit en suivant les mêmes étapes décrites en référence aux figures 17F-17H, afin de former un deuxième module actionneur 6 superposé au premier, comme illustré en figure 17I.

Au vu de la description qui précède, il apparaît clairement que le procédé proposé offre une solution particulièrement efficace pour intégrer au moins un aimant 20 à un dispositif réflecteur 1 par dépôt d'un empilement 2. Cette solution est en outre avantageusement compatible avec les procédés standards de la microélectronique.

L'invention n'est pas limitée aux modes de réalisations précédemment décrits et s'étend à tous les modes de réalisation couverts par l'invention. Différents exemples particuliers de procédés de fabrication ainsi que de configurations de dispositif réflecteur ont été décrits. Bien d'autres variantes de réalisation sont possibles, par exemple par combinaison de caractéristiques précédemment décrites, sans sortir du cadre de l'invention. En outre, les caractéristiques décrites relativement à un aspect de l'invention peuvent être combinées à un autre aspect de l'invention.

**Revendications**

1. Dispositif réflecteur (1) destiné à réfléchir un faisceau lumineux incident comprenant :

   • un substrat (S) comprenant une première partie (S1), et une deuxième partie (S2) mobile relativement à la première partie (S1) autour d'au moins un axe de rotation (A1),
   • un miroir (10) disposé de façon solidaire sur la deuxième partie (S2) du substrat (S), le miroir (10) étant configuré de façon à être pivoté autour de l'au moins un axe de rotation (A1) et de façon à recevoir le faisceau lumineux incident pour former un faisceau réfléchi,

• un module actionneur (6) comprenant au moins un aimant (20) et au moins une ligne électrique (30) configurée pour être traversée par un courant électrique (i), l'au moins une ligne électrique (30) étant à base d'un matériau électriquement conducteur (35), le module actionneur (6) étant configuré pour entrainer en rotation la deuxième partie (S2) du substrat (S) et du miroir (10) par une force motrice ($F_L$) générée par une interaction entre l'au moins un aimant (20) et le courant électrique (i) traversant l'au moins une ligne électrique (30),

**Caractérisé en ce que** l'un parmi l'au moins un aimant (20) et l'au moins une ligne électrique (30) est disposé sur la première partie (S1) du substrat (S), l'autre parmi l'au moins un aimant (20) et l'au moins une ligne électrique (30) est disposé sur la deuxième partie (S2) du substrat (S) de façon solidaire au miroir (10), et l'au moins un aimant (20) comprend un empilement (2) d'au moins une bicouche comprenant une première sous-couche (3) à base d'un matériau antiferromagnétique et une deuxième sous-couche (4) à base d'un matériau ferromagnétique, l'empilement (2) étant aimanté selon au moins une direction d'aimantation (M).

2. Dispositif réflecteur (1) selon la revendication précédente, dans lequel l'au moins un aimant (20) et l'au moins une ligne électrique (30) sont séparés d'une distance g la plus courte entre l'au moins un aimant (20) et l'au moins une ligne électrique (30), la distance g étant supérieure ou égale à 500 nm et inférieure ou égale à 7 $\mu$m, de préférence inférieure ou égale à 5 $\mu$m.

3. Dispositif réflecteur (1) selon l'une quelconque des revendications précédentes, dans lequel la deuxième sous-couche (4) à base d'un matériau ferromagnétique présente une épaisseur $e_4$ comprise entre 2 nm et 50 nm, de préférence entre 10 nm et 50 nm.

4. Dispositif réflecteur (1) selon l'une quelconque des revendications précédentes, dans lequel l'empilement (2) de l'au moins un aimant (20) présente une épaisseur comprise entre 700 nm et 5 $\mu$m, de préférence entre 900 nm et 2 $\mu$m, et plus préférentiellement encore égale à 1 $\mu$m.

5. Dispositif réflecteur (1) selon l'une quelconque des revendications précédentes, dans lequel l'empilement (2) de l'au moins un aimant (20) comprend N bicouches superposées, N étant un nombre entier compris entre 10 et 50.

6. Dispositif réflecteur (1) selon l'une quelconque des revendications précédentes, dans lequel le module actionneur (6) est configuré de sorte que deux forces motrices s'exercent sur la deuxième partie (S2) mobile du substrat (S), lesdites forces étant de sens opposé entre elles :

• le module actionneur (6) comprenant au moins deux aimants (20), l'au moins une ligne électrique (30) étant disposée sur la deuxième partie (S2) mobile du substrat (S) de façon solidaire au miroir (10), les au moins deux aimants (20) étant respectivement disposés sur la première partie (S1) de part et d'autre de l'au moins une ligne électrique (30) par rapport à l'axe de rotation du miroir (10), ou

• le module actionneur (6) comprenant au moins deux lignes électriques (30), l'au moins un aimant (20) étant disposé sur la deuxième partie (S2) mobile du substrat (S) de façon solidaire au miroir (10), les au moins deux lignes électriques (30) étant respectivement disposées sur la première partie (S1) du substrat (S) de part et d'autre de l'au moins un aimant (20) par rapport à l'axe de rotation (A1) du miroir (10).

7. Dispositif réflecteur (1) selon l'une quelconque des revendications 1 à 5, dans lequel le module actionneur (6) est configuré de sorte que deux forces motrices s'exercent sur la deuxième partie (S2) mobile du substrat (S), lesdites forces étant de sens opposé entre elles, le module comprenant au moins deux aimants (20), l'au moins une ligne électrique (30) étant disposée sur la deuxième partie (S2) mobile du substrat (S) de façon solidaire au miroir (10), les au moins deux aimants (20) étant respectivement disposés sur la première partie (S1) de part et d'autre de l'au moins une ligne électrique (30) par rapport à l'axe de rotation (A1) du miroir (10), dans lequel la deuxième partie (S2) mobile du substrat (S) présente un évidement (8) autour duquel l'au moins une ligne électrique (30) forme une boucle, le dispositif réflecteur (1) comprenant en outre un troisième aimant (20) solidaire de la première partie (S1) du substrat (S) et disposé dans l'évidement (8).

8. Dispositif réflecteur (1) selon l'une quelconque des revendications précédentes, dans lequel le miroir (10) surmonte l'un parmi l'au moins un aimant (20) et l'au moins une ligne électrique (30).

9. Dispositif réflecteur (1) selon l'une quelconque des revendications précédentes, dans lequel l'au moins un aimant (20) comprend une pluralité de sous-aimants (25) juxtaposés entre eux, chaque sous-aimant (25) étant en forme de barreau et comprenant l'empilement (2) d'au moins une bicouche, et de préférence dans lequel les sous-aimants (25) présentent des directions d'aimantation (M) distinctes entre eux.

10. Procédé de fabrication du dispositif réflecteur (1) selon l'une quelconque des revendications précédentes, le procédé comprenant :

   • une fourniture d'un substrat (S),
   • une formation du module actionneur (6) sur la face supérieure (Sa) du substrat (S), la formation comprenant :

   ◦ un dépôt, sur la face supérieure (Sa) du substrat (S), d'un empilement (2) d'au moins une bicouche comprenant une première sous-couche (3) à base d'un matériau antiferromagnétique et une deuxième sous-couche (4) à base d'un matériau ferromagnétique, superposée à la première sous-couche (3),
   ◦ un traitement thermique de l'empilement (2) déposé sous application d'un champ magnétique (B) de façon à aimanter l'empilement (2) selon au moins une direction d'aimantation (M),
   ◦ un dépôt d'un matériau électriquement conducteur (35) sur la face supérieure (Sa) du substrat (S), de façon à former l'au moins une ligne électrique (30),

   • un dépôt d'un miroir (10) sur la face supérieure (Sa) du substrat (S),
   • au moins une gravure du substrat (S) de façon à former une première partie (S1) et une deuxième partie (S2) mobile relativement à la première partie (S1) autour d'au moins un axe de rotation (A1), les dépôts et la gravure étant configurés ensemble de sorte que le miroir (10) est déposé sur la deuxième partie (S2) du substrat (S), l'un parmi l'au moins un aimant (20) et l'au moins une ligne électrique (30) est disposé sur la première partie (S1) du substrat (S), l'autre parmi l'au moins un aimant (20) et l'au moins une ligne électrique (30) est disposé sur la deuxième partie (S2) du substrat (S).

11. Procédé de fabrication du dispositif réflecteur (1) selon la revendication précédente, dans lequel le matériau ferromagnétique est à base de CoFe, et le matériau antiferromagnétique est à base de PtMn ou de IrMn.

12. Procédé de fabrication du dispositif réflecteur (1) selon l'une quelconque des deux revendications précédentes, dans lequel le traitement thermique de l'empilement (2) est réalisé à une température supérieure ou égale à 265°C, de préférence pendant une durée supérieure ou égale à 1 heure.

13. Procédé de fabrication du dispositif réflecteur (1) selon l'une quelconque des trois revendications précédentes, dans lequel l'intensité du champ magnétique (B) appliqué lors d'au moins une partie du traitement thermique est supérieure ou égale à 1 T.

14. Procédé de fabrication du dispositif réflecteur (1) selon l'une quelconque des quatre revendications précédentes, dans lequel la formation du module actionneur (6), comprend en outre :

   • une gravure de l'empilement (2) déposé de façon à former deux premiers aimants (20) distincts, séparés par un espace exposant des flancs internes des deux premiers aimants (20) et la face supérieure (Sa) du substrat (S),

15. Procédé de fabrication du dispositif réflecteur (1) selon la revendication précédente, dans lequel la formation du module actionneur (6), comprend en outre :

   • un dépôt d'une couche de résine (50) sur les deux premiers aimants (20) de façon à couvrir la surface et les flancs internes des deux premiers aimants (20) et à définir un motif destiné à la formation de l'au moins une ligne électrique (30) entre les deux premiers aimants (20),
   • le dépôt du matériau électriquement conducteur (35) dans le motif défini dans l'étape précédente, pour former l'au moins une ligne électrique (30),
   • un retrait de la couche de résine (50) après le dépôt du matériau électriquement conducteur (35).

**Patentansprüche**

1. Reflektorvorrichtung (1), die dazu bestimmt ist, einen einfallenden Lichtstrahl zu reflektieren, die Folgendes umfasst:

   • ein Substrat (S), das einen ersten Teil (S1) und einen zweiten Teil (S2), der in Bezug auf den ersten Teil (S1) um mindestens eine Rotationsachse (A1) beweglich ist, umfasst,

• einen Spiegel (10) der fest verbunden auf dem zweiten Teil (S2) des Substrats (S) angeordnet ist, wobei der Spiegel (10) dazu konfiguriert ist, um die mindestens eine Rotationsachse (A1) geschwenkt zu werden, und derart, dass er den einfallenden Lichtstrahl empfängt, um einen reflektierten Strahl zu bilden,

• ein Betätigungsmodul (6), das mindestens einen Magneten (20) und mindestens eine elektrische Leitung (30) umfasst, die dazu konfiguriert ist, von einem elektrischen Strom (i) durchquert zu werden, wobei die mindestens eine elektrische Leitung (30) auf einem elektrisch leitfähigen Material (35) basiert, wobei das Betätigungsmodul (6) dazu konfiguriert ist, den zweiten Teil (S2) des Substrats (S) und des Spiegels (10) durch eine Antriebskraft (FL) in Drehung anzutreiben, die von einer Wechselwirkung zwischen dem mindestens einen Magneten (20) und dem elektrischen Strom (i), der die mindestens eine elektrische Leitung (30) durchquert, erzeugt wird,

**dadurch gekennzeichnet, dass** eines des mindestens einen Magneten (20) und der mindestens einen elektrischen Leitung (30) auf dem ersten Teil (S1) des Substrats (S) angeordnet ist, der andere des mindestens einen Magneten (20) und der mindestens einen elektrischen Leitung (30) auf dem zweiten Teil (S2) des Substrats (S) fest verbunden mit dem Spiegel (10) angeordnet ist, und der mindestens eine Magnet (20) eine Stapelung (2) mindestens einer Doppelschicht umfasst, die eine erste Unterschicht (3) basierend auf einem antiferromagnetischen Material und eine zweite Unterschicht (4) basierend auf einem ferromagnetischen Material umfasst, wobei die Stapelung (2) gemäß mindestens einer Magnetisierungsrichtung (M) magnetisiert ist.

2. Reflektorvorrichtung (1) nach dem vorstehenden Anspruch, wobei der mindestens eine Magnet (20) und die mindestens eine elektrische Leitung (30) um den kürzesten Abstand g zwischen dem mindestens einen Magneten (20) und der mindestens einen elektrischen Leitung (30) getrennt sind, wobei der Abstand g größer oder gleich 500 nm und kleiner oder gleich 7 $\mu$m, bevorzugt kleiner oder gleich 5 $\mu$m ist.

3. Reflektorvorrichtung (1) nach einem der vorstehenden Ansprüche, wobei die zweite Unterschicht (4), die auf einem ferromagnetischen Material basiert, eine Dicke e4 zwischen 2 nm und 50 nm, bevorzugt zwischen 10 nm und 50 nm aufweist.

4. Reflektorvorrichtung (1) nach einem der vorstehenden Ansprüche, wobei die Stapelung (2) des mindestens einen Magneten (20) eine Dicke zwischen 700 nm und 5 $\mu$m, bevorzugt zwischen 900 nm und 2 $\mu$m und besonders bevorzugt gleich 1 $\mu$m aufweist.

5. Reflektorvorrichtung (1) nach einem der vorstehenden Ansprüche,
wobei die Stapelung (2) des mindestens einen Magneten (20) N übereinander gelagerte Doppelschichten umfasst, wobei N eine Ganzzahl zwischen 10 und 50 ist.

6. Reflektorvorrichtung (1) nach einem der vorstehenden Ansprüche, wobei das Betätigungsmodul (6) derart konfiguriert ist, dass zwei Antriebskräfte auf den zweiten beweglichen Teil (S2) des Substrats (S) einwirken, wobei die Kräfte entgegengesetzt ausgerichtet sind:

• wobei das Betätigungsmodul (6) mindestens zwei Magnete (20) aufweist, die mindestens eine elektrische Leitung (30) auf dem zweiten beweglichen Teil (S2) des Substrats (S) fest mit dem Spiegel (10) verbunden angeordnet ist, wobei mindestens zwei Magnete (20) jeweils auf dem ersten Teil (S1) zu beiden Seiten der mindestens einen elektrischen Leitung (30) in Bezug auf die Rotationsachse des Spiegels (10) angeordnet sind, oder

• wobei das Betätigungsmodul (6) mindestens zwei elektrische Leitungen (30) umfasst, wobei der mindestens eine Magnet (20) auf dem zweiten beweglichen Teil (S2) des Substrats (S) fest verbunden mit dem Spiegel (10) angeordnet ist, wobei die mindestens zwei elektrischen Leitungen (30) jeweils auf dem ersten Teil (S1) des Substrats (S) zu beiden Seiten des mindestens einen Magneten (20) in Bezug auf die Rotationsachse (A1) des Spiegels (10) angeordnet sind.

7. Reflektorvorrichtung (1) nach einem der Ansprüche 1 bis 5, wobei das Betätigungsmodul (6) derart konfiguriert ist, dass zwei Antriebskräfte auf den zweiten beweglichen Teil (S2) des Substrats (S) einwirken, wobei die Kräfte eine entgegengesetzte Richtung aufweisen, wobei das Modul mindestens zwei Magnete (20) umfasst, wobei die mindestens eine elektrische Leitung (30) auf dem zweiten beweglichen Teil (S2) des Substrats (S) fest verbunden mit dem Spiegel (10) angeordnet ist, wobei die mindestens zwei Magnete (20) jeweils auf dem ersten Teil (S1) zu beiden Seiten der mindestens einen elektrischen Leitung (30) in Bezug auf die Rotationsachse (A1) des Spiegels (10) angeordnet sind, wobei der zweite bewegliche Teil (S2) des Substrats (S) eine Aussparung (8) aufweist, um welche mindestens eine elektrische Leitung (30) eine Schleife bildet, wobei die Reflektorvorrichtung (1) außerdem einen dritten Magneten (20) umfasst, der fest mit dem ersten Teil (S1) des Substrats (S) verbunden und in der Aussparung (8) angeordnet ist.

8. Reflektorvorrichtung (1) nach einem der vorstehenden Ansprüche, wobei der Spiegel (10) über einem des mindestens einen Magneten (20) und der mindestens einen elektrischen Leitung (30) liegt.

9. Reflektorvorrichtung (1) nach einem der vorstehenden Ansprüche, wobei der mindestens eine Magnet (20) eine Vielzahl von Untermagneten (25), die nebeneinander liegen, umfasst, wobei jeder Untermagnet (25) eine Stabform aufweist und eine Stapelung (2) aus mindestens einer Doppelschicht umfasst, und wobei bevorzugt die Untermagnete (25) voneinander unterschiedliche Magnetisierungsrichtungen (M) aufweisen.

10. Verfahren zur Herstellung der Reflektorvorrichtung (1) nach einem der vorstehenden Ansprüche, wobei das Verfahren Folgendes umfasst:

• Bereitstellen eines Substrats (S),
• Bilden des Betätigungsmoduls (6) auf der oberen Fläche (Sa) des Substrats (S), wobei das Bilden Folgendes umfasst:

  ◦ Abscheiden auf der oberen Fläche (Sa) des Substrats (S) einer Stapelung (2) aus mindestens einer Doppelschicht, die mindestens eine erste Unterschicht (3) basierend auf einem antiferromagnetischen Material und eine zweite Unterschicht (4) basierend auf einem ferromagnetischen Material umfasst, die auf der ersten Unterschicht (3) angeordnet ist,

  ◦ eine Wärmebehandlung der Stapelung (2), die unter Anwenden eines Magnetfeldes (B) derart abgeschieden wird, dass die Stapelung (2) gemäß mindestens einer Magnetisierungsrichtung (M) magnetisiert wird,
  ◦ Abscheiden eines elektrisch leitfähigen Materials (35) auf der oberen Fläche (Sa) des Substrats (S) derart, dass mindestens eine elektrische Leitung (30) gebildet wird,

• Abscheiden eines Spiegels (10) auf der oberen Fläche (Sa) des Substrats (S),
• mindestens Ätzen des Substrats (S) derart, dass ein erster Teil (S1) und ein zweiter Teil (S2), der in Bezug auf den ersten Teil (S1) um mindestens eine Rotationsachse (A1) beweglich ist, gebildet werden, wobei das Abscheiden und das Ätzen gemeinsam derart konfiguriert sind, dass der Spiegel (10) auf dem zweiten Teil (S2) des Substrats (S) abgeschieden wird, eines des mindestens einen Magnets (20)

und der mindestens einen elektrischen Leitung (30) auf dem ersten Teil (S1) des Substrats (S) angeordnet ist, das andere des mindestens einen Magneten (20) und der mindestens einen elektrischen Leitung (30) auf dem zweiten Teil (S2) des Substrats (S) angeordnet ist.

11. Verfahren zur Herstellung der Reflektorvorrichtung (1) nach dem vorstehenden Anspruch, wobei das ferromagnetische Material auf CoFe basiert und das antiferromagnetische Material auf PtMn oder IrMn basiert.

12. Verfahren zur Herstellung der Reflektorvorrichtung (1) nach einem der zwei vorstehenden Ansprüche, wobei die Wärmebehandlung der Stapelung (2) bei einer Temperatur größer oder gleich 265 °C bevorzugt während einer Dauer größer oder gleich 1 Stunde durchgeführt wird.

13. Verfahren zur Herstellung der Reflektorvorrichtung (1) nach einem der drei vorstehenden Ansprüche, wobei die Stärke des Magnetfeldes (B) das bei mindestens einem Teil der Wärmebehandlung angelegt wird, größer oder gleich 1 T ist.

14. Verfahren zur Herstellung der Reflektorvorrichtung (1) nach einem der vier vorstehenden Ansprüche, wobei das Bilden des Betätigungsmoduls (6) außerdem Folgendes umfasst:

• Ätzen der Stapelung (2), die derart abgeschieden wird, dass zwei getrennte erste Magnete (20) gebildet werden, die von einem Raum getrennt sind, der interne Flanken der zwei ersten Magnete (20) und die obere Fläche (Sa) des Substrats (S) freilegt.

**15.** Verfahren zur Herstellung der Reflektorvorrichtung (1) nach dem vorstehenden Anspruch, wobei das Bilden des Betätigungsmoduls (6) außerdem Folgendes umfasst:

• Abscheiden einer Harzschicht (50) auf den zwei ersten Magneten (20) derart, dass die Oberfläche und die internen Flanken der zwei ersten Magnete (20) abgedeckt werden und eine Struktur definiert wird, die zum Bilden der mindestens einen elektrischen Leitung (30) zwischen den zwei ersten Magneten (20) bestimmt ist,
• Abscheiden des elektrisch leitfähigen Materials (35) in der bei dem vorhergehenden Schritt definierten Struktur, um mindestens eine elektrische Leitung (30) zu bilden,
• Entfernen der Harzschicht (50) nach dem Abscheiden des elektrisch leitfähigen Materials (35).

**Claims**

**1.** Reflector device (1) intended to reflect an incident light beam comprising:

• a substrate (S) comprising a first part (S1), and a second movable part (S2) relative to the first part (S1) about at least one axis of rotation (A1),
• a mirror (10) disposed securely on the second part (S2) of the substrate (S), the mirror (10) being configured so as to be pivoted about the at least one axis of rotation (A1) and so as to receive the incident light beam to form the reflected beam,
• an actuator module (6) comprising at least one magnet (20) and at least one electric line (30) configured to be passed through by an electric current (i), the at least one electric line (30) being based on an electrically conductive material (35), the actuator module (6) being configured to rotate the second part (S2) of the substrate (S) and of the mirror (10) by a motor force ($F_L$) generated by an interaction between the at least one magnet (20) and the electric current (i) passing through the at least one electric line (30),

**characterised in that** one from among the at least one magnet (20) and the at least one electric line (30) is disposed on the first part (S1) of the substrate (S), the other from among the at least one magnet (20) and the at least one electric line (30) is disposed on the second part (S2) of the substrate (S) in a secured manner to the mirror (10), and the at least one magnet (20) comprises a stack (2) of at least one bilayer comprising a first sublayer (3) based on an antiferromagnetic material and a second sublayer (4) based on a ferromagnetic material, the stack (2) being magnetised along at least one magnetisation direction (M).

**2.** Reflector device (1) according to the preceding claim, wherein the at least one magnet (20) and the at least one electric line (30) are separated by a shortest distance between the at least one magnet (20) and the at least one electric line (30), the distance g being greater than or equal to 500nm and less than or equal to 7$\mu$m, preferably less than or equal to 5$\mu$m.

**3.** Reflector device (1) according to any one of the preceding claims, wherein the second sublayer (4) based on a ferromagnetic material has a thickness $e_4$ of between 2nm and 50nm, preferably between 10nm and 50nm.

**4.** Reflector device (1) according to any one of the preceding claims, wherein the stack (2) of the at least one magnet (20) has a thickness of between 700nm and 5$\mu$m, preferably between 900nm and 2$\mu$m, and more preferably also equal to 1$\mu$m.

**5.** Reflector device (1) according to any one of the preceding claims, wherein the stack (2) of the at least one magnet (20) comprises N superimposed bilayers, N being an integer of between 10 and 50.

**6.** Reflector device (1) according to any one of the preceding claims, wherein the actuator module (6) is configured such that two motor forces are exerted on the second movable part (S2) of the substrate (S), said forces being of opposite directions to one another:

• the actuator module (6) comprising at least two magnets (20), the at least one electric line (30) being disposed on the second movable part (S2) of the substrate (S) in a secured manner to the mirror (10), the at least two magnets (20) being respectively disposed on the first part (S1) on either side of the at least one electric line (30) with respect to the axis of rotation of the mirror (10), or
• the actuator module (6) comprising at least two electric lines (30), the at least one magnet (20) being disposed on the second movable part (S2) of the substrate (S) in a secured manner to the mirror (10), the at least two electric lines (30) being respectively disposed on the first part (S1) of the substrate (S) on either side of the at least one magnet (20) with respect to the axis of rotation (A1) of the mirror (10).

7. Reflector device (1) according to any one of claims 1 to 5, wherein the actuator module (6) is configured such that two motor forces are exerted on the second movable part (S2) of the substrate (S), said motor forces being of opposite directions to one another, the module comprising at least two magnets (20), the at least one electric line (30) being disposed on the second movable part (S2) of the substrate (S) in a secured manner to the mirror (10), the at least two magnets (20) being respectively disposed on the first part (S1) on either side of the at least one electric line (30) with respect to the axis of rotation (A1) of the mirror (10), in which the second movable part (S2) of the substrate (S) has a recess (8) around which the at least one electric line (30) forms a loop, the reflector device (1) further comprising a third magnet (20) secured to the first part (S1) of the substrate (S) and disposed in the recess (8).

8. Reflector device (1) according to any one of the preceding claims, wherein the mirror (10) surmounts one from among the at least one magnet (20) and the at least one electric line (30).

9. Reflector device (1) according to any one of the preceding claims, wherein the at least one magnet (20) comprises a plurality of submagnets (25) juxtaposed to one another, each submagnet (25) being bar-shaped and comprising the stack (2) of at least one bilayer, and preferably in which the submagnets (25) have magnetisation directions (M) which are distinct from one another.

10. Method for manufacturing the reflector device (1) according to any one of the preceding claims, the method comprising:

- a provision of a substrate (S),
- a formation of the actuator module (6) on the upper face (Sa) of the substrate (S), the formation comprising:

  ◦ a deposition, on the upper face (Sa) of the substrate (S), of a stack (2) of at least one bilayer comprising a first sublayer (3) based on an antiferromagnetic material and a second sublayer (4) based on a ferromagnetic material, superimposed to the first sublayer (3),
  ◦ a heat treatment of the stack (2) deposited under application of a magnetic field (B), so as to magnetise the stack (2) along at least one magnetisation direction (M),
  ◦ a deposition of an electrically conductive material (35) on the upper face (Sa) of the substrate (S), so as to form the at least one electric line (30),

- a deposition of a mirror (10) on the upper face (Sa) of the substrate (S),
- at least one etching of the substrate (S), so as to form a first part (S1) and a second movable part (S2) relative to the first part (S1) about at least one axis of rotation (A1), the depositions and the etching being configured together, such that the mirror (10) is deposited on the second part (S2) of the substrate (S), one from among the at least one magnet (20) and the at least one electric line (30) is disposed on the first part (S1) of the substrate (S), the other from among the at least one magnet (20) and the at least one electric line (30) is disposed on the second part (S2) of the substrate (S).

11. Method for manufacturing the reflector device (1) according to the preceding claim, wherein the ferromagnetic material is CoFe-based, and the antiferromagnetic material is PtMn- or IrMn-based.

12. Method for manufacturing the reflector device (1) according to any one of the two preceding claims, wherein the heat treatment of the stack (2) is done at a temperature greater than or equal to 265°C, preferably for a duration greater than or equal to 1 hour.

13. Method for manufacturing the reflector device (1) according to any one of the three preceding claims, wherein the intensity of the magnetic field (B) applied during at least one part of the heat treatment is greater than or equal to 1T.

14. Method for manufacturing the reflector device (1) according to any one of the four preceding claims, wherein the formation of the actuator module (6), further comprises:

- an etching of the stack (2) deposited so as to form two first distinct magnets (20), separated by a space exposing internal flanks of the two first magnets (20) and the upper face (Sa) of the substrate (S).

**15.** Method for manufacturing the reflector device (1) according to the preceding claim, wherein the formation of the actuator module (6), further comprises:

• a deposition of a resin layer (50) on the two first magnets (20), so as to cover the surface and the internal flanks of the two first magnets (20), and to define a pattern intended for the formation of the at least one electric line (30) between the two first magnets (20),
• the deposition of the electrically conductive material (35) in the pattern defined in the preceding step, to form the at least one electric line (30),
• a removal of the resin layer (50) after the deposition of the electrically conductive material (35).

EP 4 564 078 B1

FIG. 1

20

$e_4$
$e_4$

3
4
3
4
3
2

Z
Y
X
S

**FIG. 2A**

20

3
M 4
3
M 4
3
2

B

Z
Y
X
S

**FIG. 2B**

FIG. 3

EP 4 564 078 B1

EP 4 564 078 B1

FIG. 4

FIG. 5A

FIG. 5B

FIG. 6A

FIG. 6B

FIG. 7A

DD'

FIG. 7B

FIG. 8A

FF'

FIG. 8B

FIG. 9A

FIG. 9B

FIG. 10A

FIG. 10B

20  30

Sa

G

G'    H                    H'

S

Y

Z ⊙ → X

20

FIG. 11A

30    20    Sa

Z

X ⊙ → Y

S

Sb

GG'

30              Sa

Z

Y ⊙ → X

S

Sb

HH'

FIG. 11B

FIG. 12A

II'

JJ'

FIG. 12B

FIG. 13A

KK'

LL'

FIG. 13B

FIG. 14A

FIG. 14B

20    Sa

Z
↑
○→Y
X

FIG. 15A

20          20

Z
↑
○→Y
X

FIG. 15B

35      30,35      35

50                        50

Z
↑
○→Y
X

FIG. 15C

30,35

36

Z
↑
○→Y
X

FIG. 15D

FIG. 16A

FIG. 16B

FIG. 16C

61  20  30,35  61  20  61

Z
X⊙→Y

S

FIG. 16D

20  30,35  20

62  62
61  61
20  20

Z
X⊙→Y

S

FIG. 16E

20  30,35  20

62
6{  61
20

Z
X⊙→Y

S

FIG. 16F

FIG. 17A

FIG. 17B

FIG. 17C

FIG. 17D

FIG. 17E

FIG. 17F

FIG. 17G

FIG. 17H

FIG. 17I

## RÉFÉRENCES CITÉES DANS LA DESCRIPTION

**Documents brevets cités dans la description**

- US 20160124214 A

- US 6388789 B